# EUROPEAN PATENT APPLICATION

(11) **EP 1 820 683 A1**
(43) Date of publication of application: **22.08.2007**
(21) Application number: 07003200.8
(22) Date of filing: 15.02.2007
(51) Int. Cl.: B60K 17/10

(54) **Power transmission apparatus for working vehicle**

(30) Priority: 17.02.2006 US 355996
(71) Applicant: KANZAKI KOKYUKOKI MFG. CO., LTD., Amagasaki-shi, Hyogo (JP); Tuff Torq Corporation, Morristown, TN 37814-1051 (US)
(72) Inventor: Irikura, Koji, 37814-1051 Morristown, Tennessee (US); Ohashi, Ryota, 2-18-1 Inadera Amagasaki-shi Hyogo (JP); Iida, Masaru, 2-18-1 Inadera Amagasaki-shi Hyogo (JP)
(74) Representative: Jostarndt, Hans-Dieter

(57) **Abstract**

A power transmission apparatus for a working vehicle has substantially symmetrically disposed first and second transaxles (2), each of which supports a single axle (2), and a working apparatus driving power take-off device (P1,P2) including an input member (26). A gear casing (20) is spanned between the first and second transaxles (2). A primary drive shaft (23) is disposed in the gear casing (20) so as to be drivingly connected to a prime mover (203). A traveling drive train is disposed in the gear casing (20) so as to drivingly connect the primary drive shaft (23) to the input shafts of the respective transaxles (2). A working apparatus drive train is disposed in the gear casing (20) so as to drivingly connect the primary drive shaft (23) to the input member (26) of the working apparatus driving power take-off device (P1,P2).

## Description

### BACKGROUND OF THE INVENTION

### Field of the Invention

The invention relates to a power transmission apparatus applied to a working vehicle equipped with a working apparatus, wherein a pair of symmetric transaxles, each of which includes a single axle, and a working apparatus driving power take-off device including a clutch are unified such as to constitute the power transmission apparatus.

### Related Art

Conventionally, there is a well-known working vehicle equipped with left and right symmetric independent transaxles for driving respective left and right axles, such as pedestrian-controlled lawn mowers disclosed in US Patent No. 5,127,215 (first document) and International Publication No. 97/15764 (second document). This type vehicle is advantageous in miniaturization, in ensuring a large space for the working apparatus, in sharp turnability (enabling "zero-turn", as it is called), and so on.

In each of the working vehicles as disclosed in the above first and second documents, two pulleys are provided on a vertically downwardly extended engine output shaft of an engine serving as a prime mover. A belt is interposed between one of the pulleys and input pulleys of the left and right transaxles, and another belt is interposed between the other pulley and an input pulley of a working apparatus (mower deck), so that the engine power is distributed between both of the left and right traveling transaxles and the working apparatus.

In each of the working vehicles as disclosed in the first and second documents, the engine is mounted on a horizontal plate-shaped portion of a frame covering the top of both of the transaxles.

With respect to a device for selectively transmitting or isolating power to and from the working apparatus, as disclosed in the second document, for instance, a clutch brake is disposed within a pulley on the engine output shaft for transmitting power to the mower deck.

Each of the left and right transaxles is an integral hydrostatic transaxle (IHT), as it is called, which includes an axle housing incorporating a hydrostatic transmission (HST) comprising mutually fluidly connected hydraulic pump and motor. The hydraulic pump includes a vertical pump shaft provided on a portion thereof above the housing with an input pulley for receiving power from the engine. The hydraulic motor of the exemplificative IHT disclosed in the second document includes a vertical motor shaft which is advantageous for miniaturization in the lateral width and in the fore-and-aft length. In this disclosed example, the vertical motor shaft projects at the top thereof upward from the housing, and a dry brake is configured between the top of the motor shaft and the upper surface of the housing.

The requested point is unification of the pair of transaxles, the working apparatus driving power take-off device including the clutch, and the transmission mechanism for drivingly connecting the output portion of the prime mover to the transaxles and the clutch. Further, the unit achieved by the unification should have rigidity such as to keep the unit as it is.

From this viewpoint, International Publication No. 97/15764 discloses a structure of mutually integrated transaxles. However, the structure integrally includes neither a mechanism for transmitting power to the transaxles nor the working apparatus driving power take-off device. One reason why the mechanisms for transmitting power from the prime mover to the transaxles and to the working apparatus driving power-take off device, disclosed in each of US Patent No. 5,127,215 and International Publication No. 97/15764, are difficult to be integrated with the transaxles is that they are belt transmission mechanisms.

Additionally, the belt transmission mechanism requires complicated work for adjusting a tension of the belt which varies because of variation of humidity or for another reason. In the case that the belt is used for transmitting power to the pair of left and right transaxles, the tension-adjusting work is further complicated because the power transmission efficiencies to the respective transaxles have to be equalized.

### SUMMARY OF THE INVENTION

An object of the invention is to provide an economic power transmission apparatus for a working vehicle, wherein the working vehicle travels by a pair of transaxles each of which is provided with a single axle, and wherein the power transmission apparatus is an assembly unit of the pair of transaxles, a working apparatus driving power transmission device including a clutch, and a power transmission mechanism for drivingly connecting an output portion of a prime mover to the pair of transaxles and the clutch.

The thing to be considered in configuring the power transmission apparatus is assurance of rigidity of the resultant power transmission apparatus such as to keep the power transmission apparatus as a unit. Further, the power transmission apparatus requires power to be equally transmitted to the transaxles stably regardless of conditions such as humidity.

To achieve the above object, a power transmission apparatus for a working vehicle according to the present invention comprises: substantially symmetrically disposed first and second transaxles, each of which supports a single axle; and a working apparatus driving power take-off device including an input member. A gear casing is spanned between the first and second transaxles. A primary drive shaft is disposed in the gear casing so as to be drivingly connected to a prime mover. A traveling drive train is disposed in the gear casing so as to drivingly connect the primary drive shaft to the input shafts of the respective first and second transaxles. A working apparatus drive train is disposed in the gear casing so as to drivingly connect the primary drive shaft to the input member of the working apparatus driving power take-off device.

The power transmission apparatus is suitable to be easily mounted onto various working vehicles, so as to reduce assembling processes and costs. Since the gear casing is solely spanned between the first and second transaxles, the power transmission apparatus has a sufficient rigidity to keep itself as a unit with no additional member for mutually connecting the first and second transaxles. Further, the power transmission apparatus comprises a gear train for transmitting power to the transaxles and a clutch of the working apparatus driving power-take off device, thereby requiring no work for adjusting tension of a member such as a belt, and stably and reliably keeping equality of the power transmission efficiencies to the respective transaxles regardless of weather condition or so on.

Preferably, the working apparatus driving power take-off device is disposed between the first and second transaxles in the axial direction of the axles. In this way, the space between the first and second transaxles is utilized for drivingly connecting the working apparatus driving power take-off device to a working apparatus without interference with any of the transaxles.

Preferably, the input shafts of the transaxles are inserted into the gear casing, the primary drive shaft is disposed at the middle between the input shafts of the transaxles, a first drive train portion of the traveling drive train from the primary drive shaft to the input shaft of the first transaxle is a first gear train, a second drive train portion of the traveling drive train from the primary drive shaft to the input shaft of the second transaxle is a second gear train, and the first and second gear trains are disposed substantially symmetrically with respect to the primary drive shaft. The substantially symmetric first and second gear trains which can easily and surely equalize torques inputted to the respective transaxles are provided only by substantially symmetrically arranging two gear trains having equal structures.

Further preferably, in the power transmission apparatus comprising the substantially symmetric first and second gear trains to the respective transaxles, the working apparatus drive train includes a gear train from the primary drive shaft to the input member of the working apparatus driving power take-off device. Due to the gear train serving as the working apparatus drive train, the working apparatus driving power take-off device can be disposed at a suitable place prevented from interfering with a drive connection mechanism interposed between the primary drive shaft and a prime mover or with the transaxles.

Further preferably, the gear train serving as the working apparatus drive train is disposed substantially perpendicularly to the first and second gear trains serving as the traveling drive train. Therefore, the gear train serving as the working apparatus drive train is disposed so as to be also prevented from interfering with both the first and second transaxles, and so as to be substantially equally distant from both of the first and second transaxles to thereby keep a good weight balance of the power transmission apparatus.

Alternatively, preferably, in the power transmission apparatus comprising the substantially symmetric first and second gear trains to the respective transaxles, the primary drive shaft serves as the input member of the working apparatus driving power take-off device. Therefore, the gear casing is miniaturized as well as the working apparatus drive train, thereby miniaturizing the entire power transmission apparatus. Further, there exists no need of constructing a gear train serving as the working apparatus drive train, thereby reducing costs due to reduction of the number of parts.

Alternatively, preferably, in the power transmission apparatus for a working vehicle, in which the primary drive shaft, the traveling drive train and the working apparatus drive train are disposed inside the gear casing spanned between the first and second transaxles, the input shaft of the first transaxle serves as the primary drive shaft, and the drive train portion to the second transaxle is a gear train from the primary drive shaft to the input shaft of the second transaxle. Consequently, the position of the primary drive shaft in the working vehicle becomes eccentric toward the first transaxle. This arrangement is advantageous for smoothly drivingly connecting the power transmission apparatus to the prime mover when a place of the prime mover in the working vehicle is eccentric toward the first transaxle. Additionally, input torques to the respective transaxles can be surely equalized by configuring the gear train to the input gear of the second transaxle so as to make the rotary speed ratio of the input shaft of the second transaxle to the input shaft of the first transaxle into 1:1.

Further preferably, the working apparatus drive train includes a gear train to the input member of the working apparatus driving power take-off device branched from an intermediate portion of the gear train from the primary drive shaft to the input shaft of the second transaxle. Due to the gear train serving as the working apparatus drive train, the working apparatus driving power take-off device can be disposed at a suitable place prevented from interfering with a drive connection mechanism interposed between the primary drive shaft and a prime mover or with the transaxles. Further, the gear train serving as the working apparatus drive train includes the portion between the primary drive shaft and the branching point of the gear train, which is shared by the gear train to the input shaft of the second transaxle, thereby preventing increase of components and expansion of the gear casing, and thereby ensuring miniaturization of the power transmission apparatus.

Further preferably, the gear train of the working apparatus drive train branched to the input member of the working apparatus driving power take-off device is disposed substantially perpendicularly to the gear train from the primary drive shaft to the input shaft of the second transaxle. Therefore, the gear train serving as the working apparatus drive train is disposed so as to be prevented from interfering with both of the first and second transaxles and to be equally distant from the first and second transaxles.

Preferably, in the power transmission apparatus for a working vehicle, in which the primary drive shaft, the traveling drive train and the working apparatus drive train are disposed inside the gear casing spanned between the first and second transaxles, the traveling drive train has a plurality of rotary shafts and at least one of the rotary shafts constituting the traveling drive train projects outward from the gear casing so as to be provided thereon with a cooling fan enabling cooling both of the first and second transaxles. Due to the arrangement of the cooling fan, both of the transaxles can be efficiently cooled with the cooling fan.

Alternatively, preferably, in the power transmission apparatus for a working vehicle, in which the primary drive shaft, the traveling drive train and the working apparatus drive train are disposed inside the gear casing spanned between the first and second transaxles, the input shafts of the respective first and second transaxles penetrate the gear casing, and project outward from the gear casing so as to be provided thereon with respective cooling fans. Due to the arrangement of cooling fans, cooling fans essentially provided to the respective transaxles can be used because each of the cooling fans has to cool only the corresponding transaxle.

Preferably, in the power transmission apparatus for a working vehicle, in which the primary drive shaft, the traveling drive train and the working apparatus drive train are disposed inside the gear casing spanned between the first and second transaxles, the working apparatus driving power take-off device includes a power take-off shaft; and a clutch for selectively drivingly engaging or disengaging the input member of the working apparatus driving power take-off device to and from the power take-off shaft. Therefore, the clutch included by the working apparatus driving power take-off device is unified into the power transmission apparatus.

Preferably, the clutch is disposed inside the gear casing. Therefore, no casing for enclosing the clutch is required in addition to the gear casing, thereby reducing the number of components and ensuring the unity of the power transmission apparatus.

Alternatively, preferably, the clutch is continuously connected to the outside of the gear casing. Therefore, the gear casing which does not incorporate the clutch can be miniaturized.

Preferably, the working apparatus driving power take-off device including the clutch also includes a gear train interposed between the clutch and the power take-off shaft. Due to this gear train, the deceleration ratio for setting a suitable rotary speed of the power take-off shaft is ensured.

Further preferably, the gear train of the working apparatus driving power take-off device interposed between the clutch and the power take-off shaft is disposed between the first and second transaxles. Therefore, the gear train is disposed so as to be prevented from both of the first and second transaxles.

Further preferably, the gear train of the working apparatus driving power take-off device interposed between the clutch and the power take-off shaft is disposed substantially perpendicularly to the traveling drive train. Therefore, the gear train of the working apparatus driving power take-off device is substantially distant from the first and second transaxles so as to ensure a good weight balance of the power transmission apparatus,

Preferably, in the power transmission apparatus for a working vehicle comprising the working apparatus driving power take-off device including the clutch, a plurality of power take-off shafts serve as the power take-off shaft of the working apparatus driving power take-off device, and wherein a selector is disposed between the plurality of power take-off shafts at the downstream side of the clutch so as to selectively transmit power to the plurality of power take-off shafts. Therefore, the power transmission apparatus can be applied to a working vehicle equipped with two working apparatuses with the above effects, and the selector provided in addition to the clutch controls transmission or isolation of power to and from the two working apparatuses.

Preferably, the integral assembly unit of the gear casing and the transaxles can be selectively mounted onto a vehicle frame whether the primary drive shaft is disposed vertically or horizontally, in correspondence to the output direction of the prime mover, Therefore, the power transmission apparatus can be adapted to either a working vehicle equipped with a prime mover including a vertical output shaft or a working vehicle equipped with a prime mover including a horizontal output shaft.

Preferably, in the power transmission apparatus, fluid can flow among the first and second transaxles and the gear casing. Therefore, no additional reservoir tank is required. The volume regulation of fluid sumps in the respective first and second transaxles can be ensured, and gears and the like in the gear casing can be supplied with lube, while ensuring compactness of the entire power transmission apparatus.

Preferably, in the power transmission apparatus, the first and second transaxles include respective separate housings supporting the respective axles. The gear casing is spanned between the housings of the respective first and second transaxles. Therefore, the individual housings and gear casing are simple and compact, and facilitate to be standardized. The first and second transaxles can be easily separated from each other and from the power transmission apparatus advantageously for assembly and maintenance.

Alternatively preferably, in the power transmission apparatus, the gear casing is formed integrally with a housing having a pair of opposite portions constituting the respective first and second transaxles. Therefore, the single housing is shared among the gear train in the gear casing and the first and second transaxles, so as to reduce the number of parts, and to increase the rigidity of connection part between the first and second transaxles.

Further preferably, the housing has a portion constituting the working apparatus driving power take-off device between the opposite portions constituting the respective first and second transaxles in the axial direction of the axles. Therefore, the housing constituting the transaxles and the gear casing also constitutes the working apparatus driving power take-off device, thereby further reducing the number of parts, and to further increase the rigidity of connection part among the working apparatus driving power take-off device and the first and second transaxles.

These, further and other objects, features and advantages will appear more fully from the following description with reference to accompanying drawings.

### BRIEF DESCRIPTION OF THE DRAWINGS

Fig. 1 is a sectional side view of a working vehicle (riding lawn mower) 100 equipped with a power transmission unit A1.

Fig. 2 is a plan view of power transmission unit A1 (with a gear casing 20 from which an upper casing part 20U is removed).

Fig. 3 is a plan view of a transaxle T.

Fig. 4 is a sectional side view of transaxle T connected to gear casing 20.

Fig. 5 is a rear view partly in section of transaxle T connected to gear casing 20.

Fig. 6 is a sectional side view of gear casing 20 to be adapted to power transmission unit A1 (and A2, A3 and A4).

Fig. 7 is a sectional rear view of a principal portion of power transmission unit A1.

Fig. 8 is a sectional rear view of a principal portion of a power transmission unit A2.

Fig. 9 is a sectional rear view of a principal portion of a power transmission unit A3.

Fig. 10 is a sectional rear view of a principal portion of a power transmission unit A4.

Fig. 11 is a sectional rear view of a principal portion of a power transmission unit B.

Fig. 12 is a sectional rear view of a principal portion of a power transmission unit C1.

Fig. 13 is a sectional rear view of a principal portion of a power transmission unit C2.

Fig. 14 is a sectional side view of a working vehicle (riding lawn mower) 200 equipped with a power transmission unit D.

Fig. 15 is a front view of power transmission unit D (with a gear casing 70 from which a front casing part 70F is removed).

Fig. 16 is a sectional side view of gear casing 70 to be adapted to power transmission unit D.

Fig. 17 is a sectional plan view of a principal portion of power transmission unit D.

Fig. 18 is a sectional side view of a working vehicle (riding lawn mower) 120 equipped with a power transmission unit E,

Fig. 19 is a plan view of power transmission unit E (with a gear casing 90 from which an upper casing part 90U is removed).

Fig. 20 is a sectional side view of gear casing 90 to be adapted to power transmission unit E.

Fig. 21 is a plan view of a principal portion of a power transmission unit F.

Fig. 22 is a sectional rear view of the principal portion of power transmission unit F.

Fig. 23 is a cross sectional view taken along XXIII-XXIII of Fig. 21.

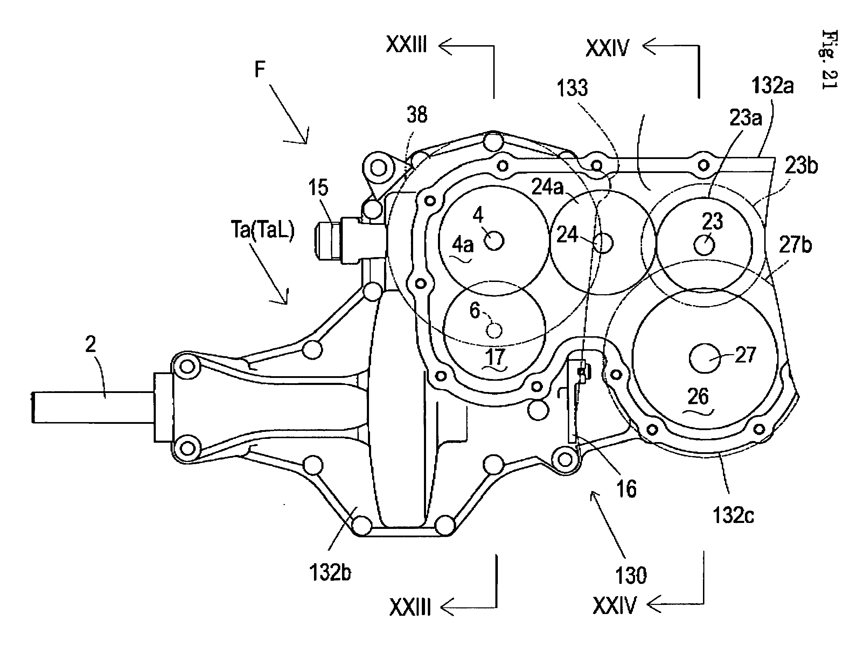

Fig, 24 is a cross sectional view taken along XXIV-XXIV of Fig. 21.

### DETAILED DESCRIPTION OF THE INVENTION

Power transmission units A1 to A4, B, C1, C2, D and E, serving as embodiments of a unified power transmission apparatus (hereinafter, referred to as a "power transmission unit") according to the present invention, will be described.

In a common structure shared among all these power transmission units, a pair of left and right symmetric transaxles TL and TR (generally named as "transaxles T") include respective housings 1, and a gear casing is spanned between housings 1. A working apparatus driving power take-off device including a clutch is disposed in (or in continuous connection to) the gear casing. Further, the gear casing incorporates a primary drive shaft drivingly connected to a prime mover, a traveling drive train from the primary drive shaft to the respective transaxles, and a working apparatus drive train from the primary drive shaft to an input member of the working apparatus driving power take-off device. Common transaxles T are adapted to all the embodiments of the power transmission unit. The structure of transaxles T will be representatively detailed in description of power transmission unit A1 serving as a first embodiment.

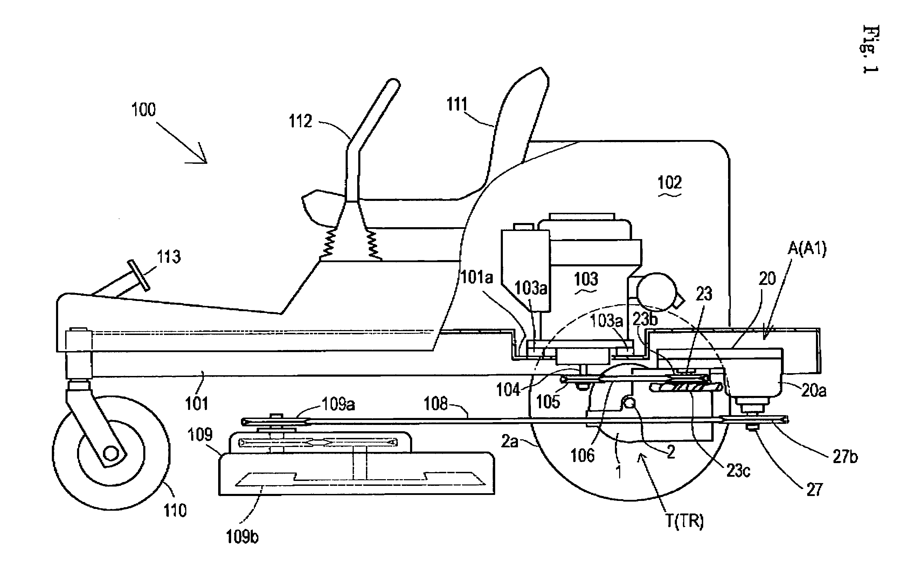

Firstly, a working vehicle (riding lawn mower) 100 shown in Fig. 1 serving as an embodiment of a working vehicle employing power transmission unit A1 will be described. Working vehicle 100 includes a fore-and-aft elongated vehicle frame 101. A vertical crankshaft type engine 103 serving as a prime mover is mounted upright on a top surface of vehicle frame 101 through vibration isolating rubbers 103a. More specifically, the top surface of vehicle frame 101 is recessed downward so as to form a recess 101 a. Engine 103 is mounted on the bottom surface of recess 101a. In this way, the position of engine 103 is lowered while ensuring a suitable height of power transmission unit A1 under frame 101 so as to realize an efficient power transmission to power transmission unit A1 (i.e., to realize horizontal looping of a belt 106 as discussed later), and to lower the weight balance point for stabilizing the travel of working vehicle 100.

Power transmission unit A1 is disposed below frame 101 behind engine 103, Power transmission unit A1 is configured so that, while a left transaxle TL and a right transaxle TR (only right transaxle TR is shown in Fig. 1) are disposed laterally symmetrically, a gear casing 20 is spanned between a housing 1 of left transaxle TL and a housing 1 of right transaxle TR.

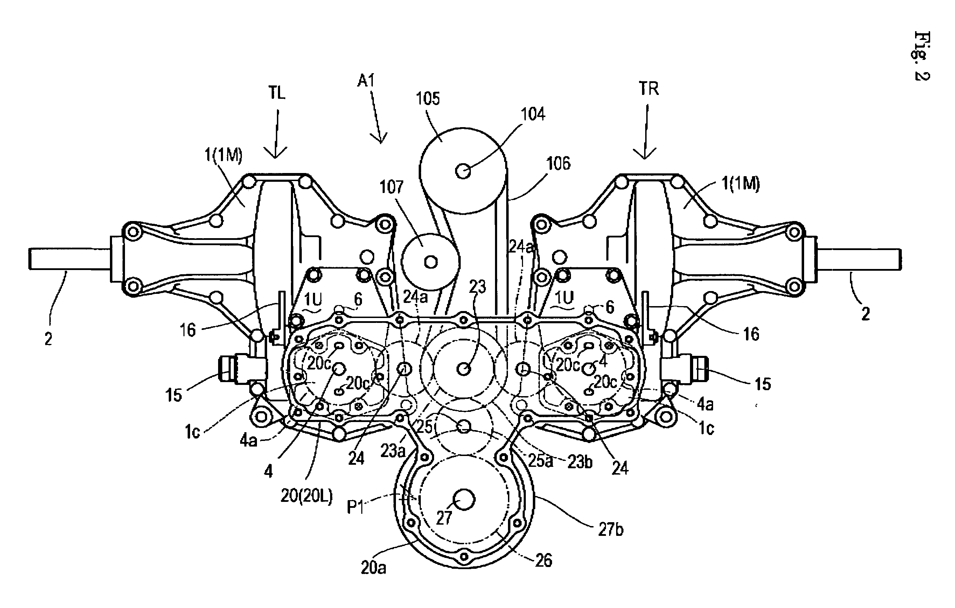

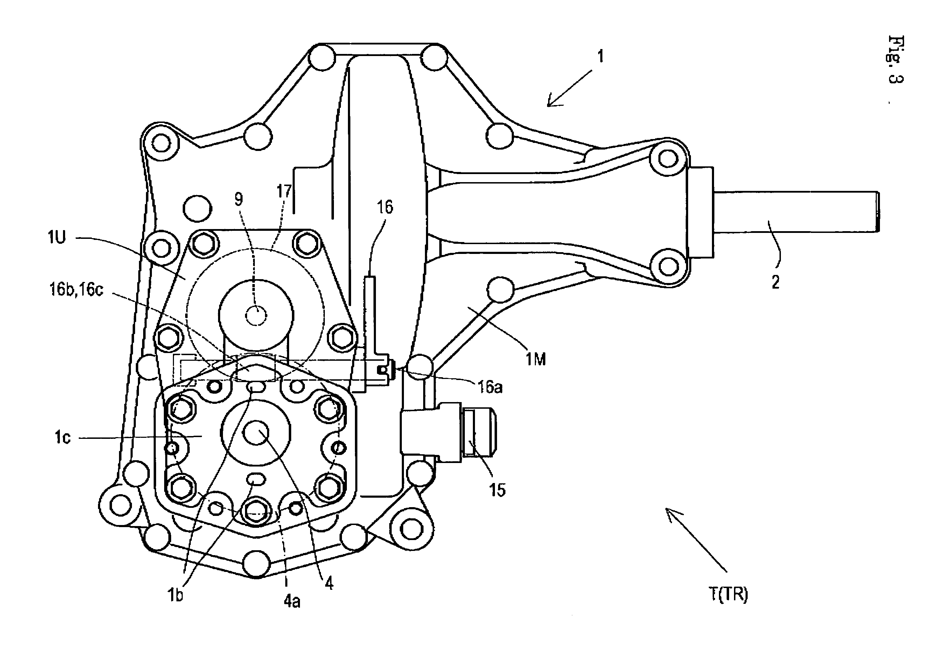

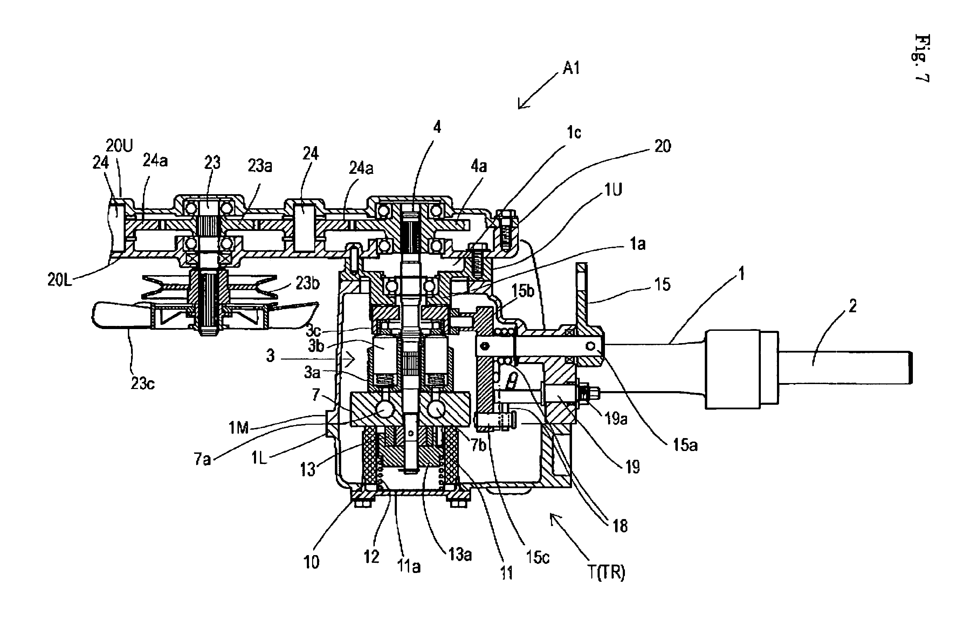

Each of left and right transaxles TL and TR is provided with an HST serving as a continuously variable transmission for driving a corresponding axle 2. In this regard, in housing 1, a laterally horizontal pump control shaft 15a (see Fig. 7) is disposed (in parallel to axle 2) pivotally centered on the axis thereof. As shown in Fig. 2, a speed control arm 15 is fixed on an end portion of pump control shaft 15a projecting outward from a laterally distal side of housing 1 (axle 2 also projects outward from this side of housing 1), so that speed control arm 15 is rotatable in the fore-and-aft direction integrally with pump control shaft 15a. Further, in each of housings 1, a laterally horizontal brake control shaft 16a (see Fig. 3) is disposed (in parallel to axle 2) pivotally centered on the axis thereof. As shown in Fig. 2, a brake arm 16 is fixed on an end portion of brake control shaft 16a projecting outward from the laterally distal side of housing 1, so that brake arm 16 is rotatable in the fore-and-aft direction integrally with brake control shaft 16a.

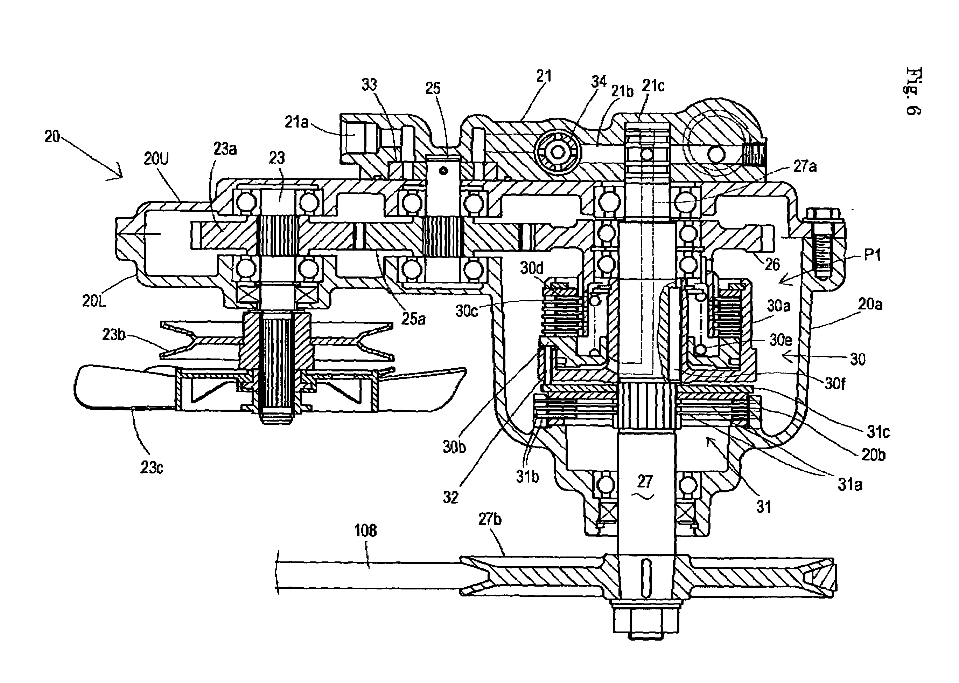

Gear casing 20 is formed at a rear end portion thereof with a working apparatus clutch housing portion 20a which incorporates a later-discussed working apparatus driving power take-off device P1 including a later-discussed working apparatus clutch 30 (see Fig. 6 and others). A power take-off (PTO) shaft 27 is extended downward from working apparatus clutch 30 and projects vertically downward from working apparatus clutch housing portion 20a. A primary drive shaft 23 projects downward from a front portion of gear casing 20 in front of working apparatus clutch housing portion 20a. An input pulley 23b and a cooling fan 23c are provided on the downward projecting portion of primary drive shaft 23. Gear casing 20 incorporates a traveling gear train, serving as the above-mentioned traveling drive train, extended from primary drive shaft 23 to respective transaxles TL and TR, and a working apparatus gear train, serving as the above-mentioned working apparatus drive train, extended from primary drive shaft 23 to an input member (in this embodiment, an upstream side drive gear 26 of working apparatus clutch 30 as mentioned later) of working apparatus driving power take-off device P1 disposed in working apparatus clutch housing portion 20a. Namely, common primary drive shaft 23 drivingly connected to engine 103 is shared between the traveling gear train and the working apparatus gear train which are both disposed in gear casing 20.

An output shaft 104 of engine 103 is extended vertically downward through vehicle frame 101. An output pulley 105 is fixed on output shaft 104 under frame 101. A belt 106 is horizontally looped over output pulley 105 and input pulley 23b, so as to constitute a belt transmission mechanism drivingly connecting output shaft 104 of engine 103 to primary drive shaft 23 of power transmission unit A1. Incidentally, a tension pulley 107 is pivoted onto vehicle frame 101 or the like, and pressed against belt 106 so as to cause a tension of belt 106.

Housing 1 of each transaxle T supports single axle 2 projecting outward therefrom. Left and right transaxles TL and TR are laterally juxtaposed so as to orient left and right axles 2 coaxially opposite to each other. A drive wheel 2a is provided on a distal end of each axle 2. Casters 110, serving as follower wheels, are supported at a front end of vehicle frame 101. Normally, two left and right casters 110 are applied. Alternatively, only a single caster 110, or more than two casters 110 may be applied.

A mower unit 108 is disposed in a space surrounded by drive wheels 2a and 2a and casters 110 below vehicle frame 101. Mower unit 109 is provided with mowing rotary blades 109b, and a transmission mechanism (in this embodiment, a belt transmission mechanism) to rotary blades 109b. An input pulley 109a projects upward from mower unit 109 so as to serve as an input section of the transmission mechanism. A pulley 27b is fixed on the above-mentioned downward projecting portion of PTO shaft 27 of power transmission unit A1. A belt 108 is looped over pulley 27b and input pulley 109a so as to drivingly connect PTO shaft 27 to rotary blades 109b of mower unit 109.

Mower unit 109 is vertically movably suspended from vehicle frame 101, Power transmission unit A1 may be disposed so that working apparatus clutch housing portion 20a serves as the front end portion of gear casing 20. However, due to the arrangement of power transmission unit A1 such as to place working apparatus clutch housing portion 20a at the rear end of gear casing 20, as shown in Fig. 1, the distance between pulleys 27b and 109a with belt 109 interposed therebetween becomes sufficient to reduce a swing angle of belt 108 caused by the vertical movement of mower unit 109.

An engine room 102 incorporating engine 103 and so on is configured above a rear half portion of vehicle frame 141. A driver's seat 111 is disposed just in front of engine room 102, and a pair of left and right control levers 112 are disposed on respective left and right sides of driver's seat 111. Each of control levers 112 interlocks with corresponding speed control arm 15 pivoted on housing 1 of each transaxle T. In each transaxle T, the output rotary speed and direction of the later-discussed HST disposed in corresponding housing 1 are controlled in correspondence to the tilt angle and direction of corresponding control lever 112 and speed control arm 15, thereby determining forward/backward rotary direction and speed of corresponding axle 2. By differentially operating control levers 112 in tilt angle and direction, left and right transaxles TL and TR become differential in output rotary speed and direction, so as to cause differential rotation of left and right axles 2, thereby left-and-right turning working vehicle 100. Further, when one control lever 112 is tilted in the direction for forward traveling and the other control lever 112 is tilted in the direction for backward traveling to a speed position for the speed equal to that of control lever 112 set for forward traveling, working vehicle 100 turns centered on the tread center point between left and right drive wheels 2a, i.e., working vehicle 100 zero-turns.

A common brake pedal 113 for left and right transaxles TL and TR is disposed above vehicle frame 101 in front of driver's seat 111. Each transaxle T is provided with a brake for braking corresponding axle 2, as mentioned later. Brake arm 16 for operating this brake is pivoted on housing 1 of corresponding transaxle T, as mentioned above. Brake arms 16 of respective transaxles TL and TR are operatively connected to common brake pedal 113 so that both brake arms 16 are simultaneously operated in the direction for braking by depression of brake pedal 113,

Power transmission apparatus A1 will be described with reference to Figs, 2 to 7. As shown in Fig. 2, power transmission unit A1 is configured so that gear casing 20 incorporating working apparatus driving power take-off device P1 is spanned between housings 1 of left and right symmetric transaxles TL and TR.

The structure of transaxle T. which is common to each of the later-discussed power transmission units, will be described with reference to Figs. 2 to 5 and 7. In this regard, Figs. 3 to 5 and 7 illustrate only representative right transaxle TR. Left transaxle TL omitted from the drawings is laterally symmetric with right transaxle TR (in the axial direction of axles 2). In the lateral direction, words "proximate" and "distal" are referred to on the basis of positional relation to the lateral center of the vehicle (passing between transaxles TL and TR), unless any specially mentioned exception exists.

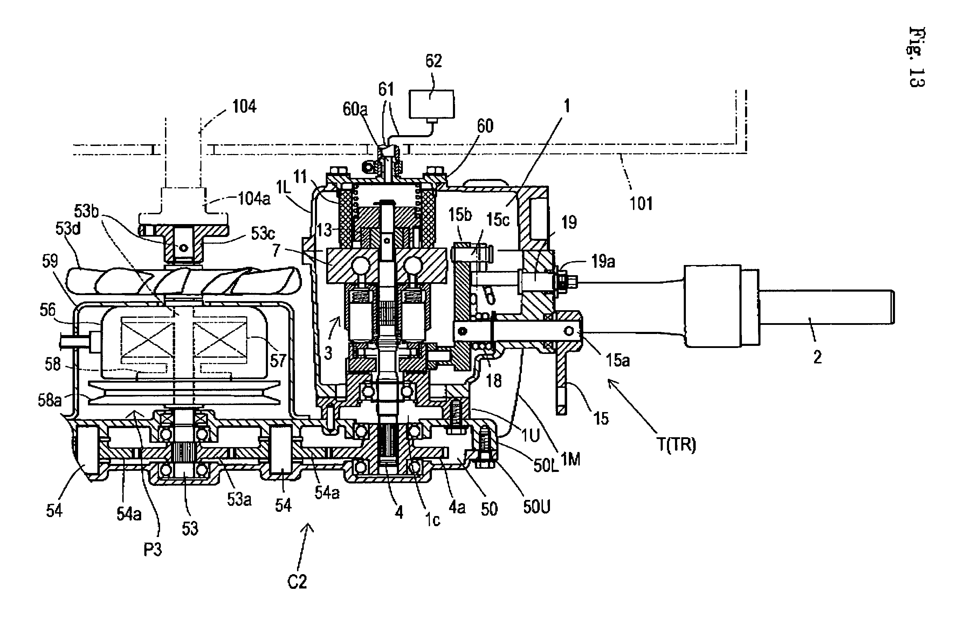

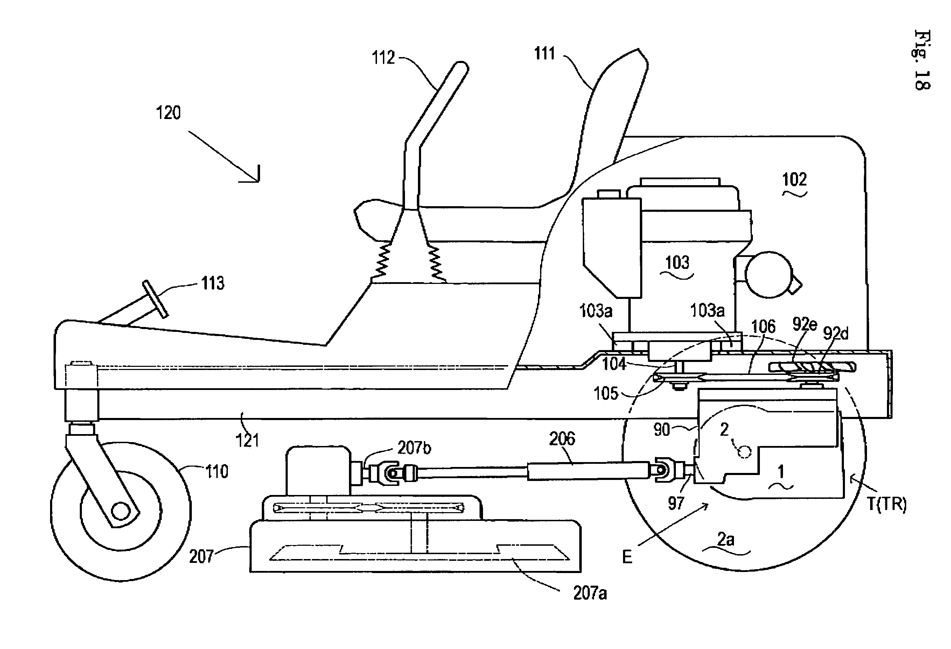

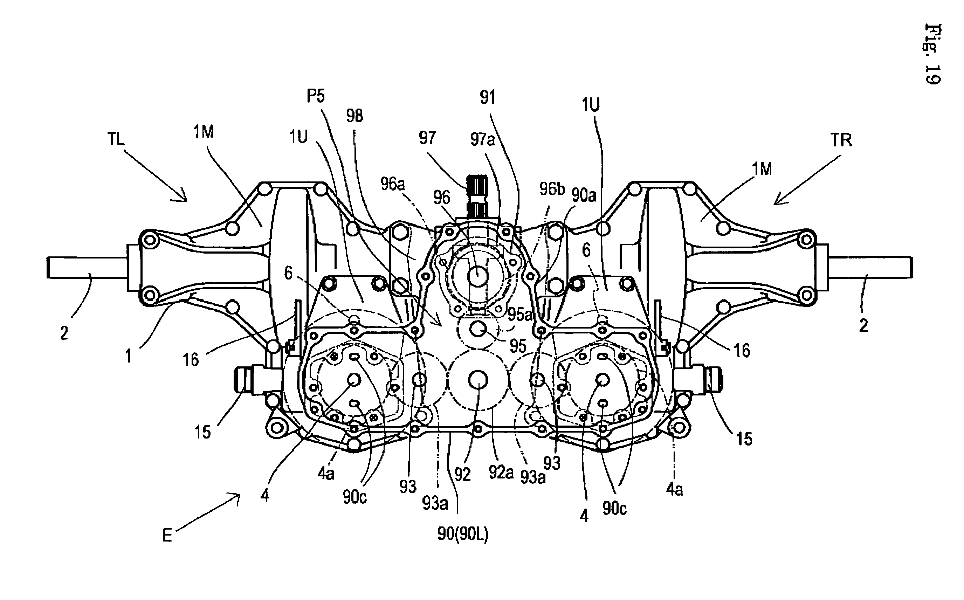

Each of the power transmission units can be disposed so as to have a left transaxle to be used as right transaxle TR for another power transmission unit, and have a right transaxle to be used as left transaxle TL for another power transmission unit, if this arrangement is suitable for a target vehicle. However, in the following illustrated respective embodiments of the power transmission units, as a unified rule, when viewed about the forward traveling vehicle, leftward disposed transaxle T is referred to as left transaxle TL, and rightward disposed transaxle T is referred to as right transaxle TR, regardless of their construction. For example, later-discussed power transmission unit C2 shown in Fig. 13 serves as vertically reversed power transmission unit C1 plus additional arrangement. Right transaxle TR of power transmission unit C2 is transaxle T to be used as left transaxle TL for power transmission unit C1. Further, with respect to power transmission unit E shown in Fig. 19, in association with arrangement thereof in working vehicle 120 as shown in Fig. 18, right transaxle TR is transaxle T used as left transaxle TL in power transmission unit A1, and left transaxle TL is transaxle T used as right transaxle TR in power transmission unit A1.

Each of power transmission unit A1 and later-discussed power transmission units A2 to A4 will be described on the assumption that it is disposed so as to have laterally horizontal axles 2, vertical input shafts (pump shafts) 4, and gear casing 20 connected onto tops of housings 1, so as to provide a working vehicle 100 equipped with engine 103 having vertical output shaft 104 as shown in Fig. 1.

A middle housing part 1 M and a lower housing part 1 L are vertically joined to each other through a horizontal joint surface, and an upper housing part 1 U and middle housing part 1 M are vertically joined to each other through a horizontal joint surface, thereby constituting housing 1 of transaxle T. These housing parts are fastened to one another by bolts, so that they can be separated from one another by loosening the bolts.

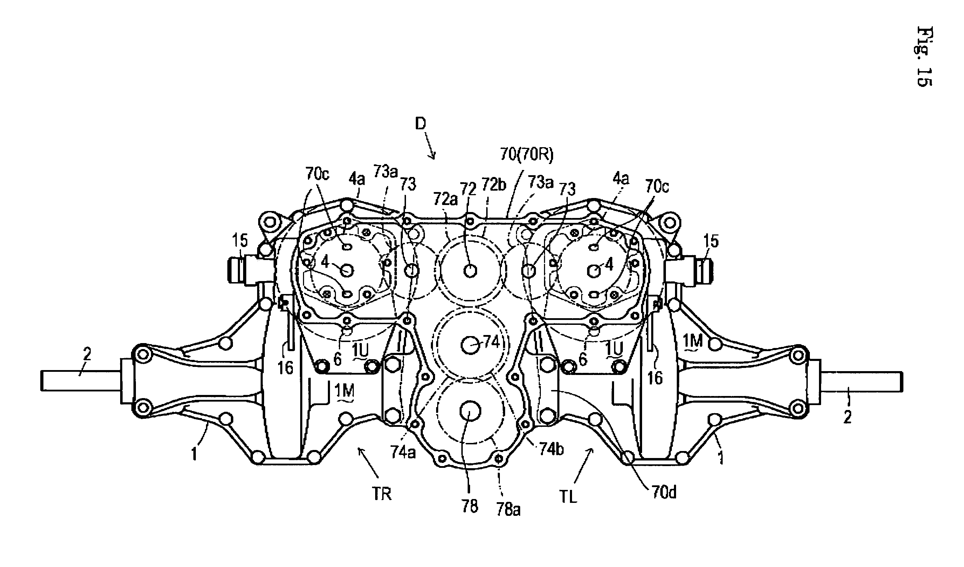

The references "upper", "middle" and "lower" designating respective housing parts 1 U, 1 M and 1 L are based on the arrangement of housing 1 in the condition that pump shaft 4 is vertical and gear casing 20 is connected onto the tops of housings 1 as mentioned above. Further, the references "upper", "middle" and "lower" constantly designate respective housing parts 1 U, 1 M and 1L. That is, even if the positional relation among housing parts 1 U, 1 M and 1 L is changed, for example, even if transaxle T is vertically reversed (so that housing part 1 L is disposed at the top of housing 1, and housing part 1 U is disposed at the bottom of housing 1) as shown in the later-discussed embodiment of Fig. 13, or even if transaxle T is tilted at an angle of 90 degrees (so as to align housing parts 1 U, 1 M and 1 L in the fore-and-aft direction) as shown in the embodiment of Figs. 15 to 17, housing parts 1U, 1 M and 1 L are still referred to by the original name of "upper" housing part 1U, "middle" housing part 1 M and "lower" housing part 1 L, respectively.

Transaxle T is an integral hydrostatic transaxle (IHT) including housing 1 incorporating axle 2, a hydrostatic stepless transmission (HST), and a deceleration gear train drivingly connecting the HST to axle 2, wherein the HST includes a hydraulic pump 3, a hydraulic motor 5, a center section 7 and so on.

Axle 2 is disposed laterally horizontally in middle housing part 1 M. Axle 2 is journalled at a lateral intermediate portion thereof by a right distal end of middle housing part 1 M through a bearing 2b. A right distal portion of axle 2 projects rightwardly outward from the right distal end of middle housing part 1 M. On the other hand, middle housing part 1 M is formed with a downward vertical wall, lower housing part 1 L is formed with an upward vertical wall, and a left proximal portion of axle 2 is pivotally sandwiched between a semicircular recess formed on the bottom of the downward vertical wall of middle housing part 1 M and a semicircular recess formed on the top of the upward vertical wall of lower housing part 1 L.

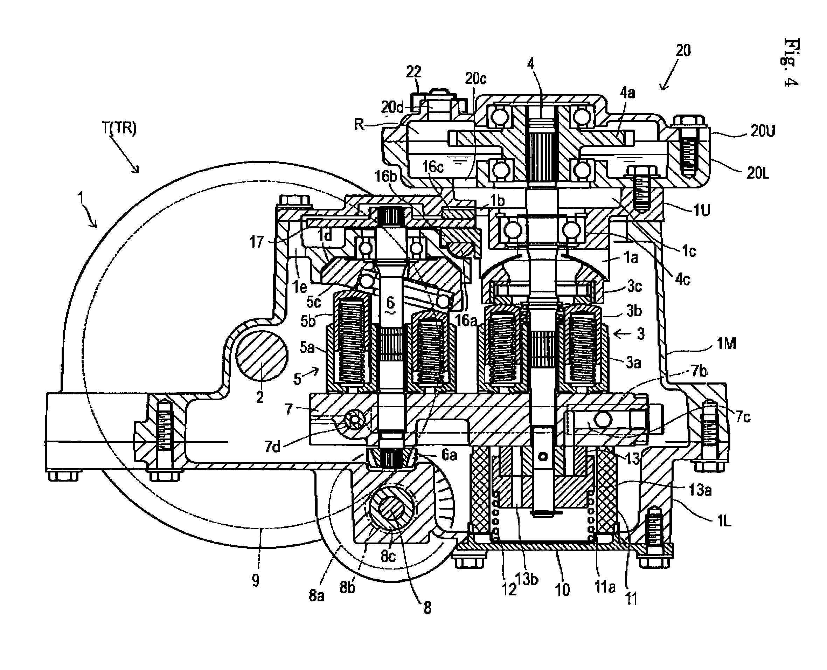

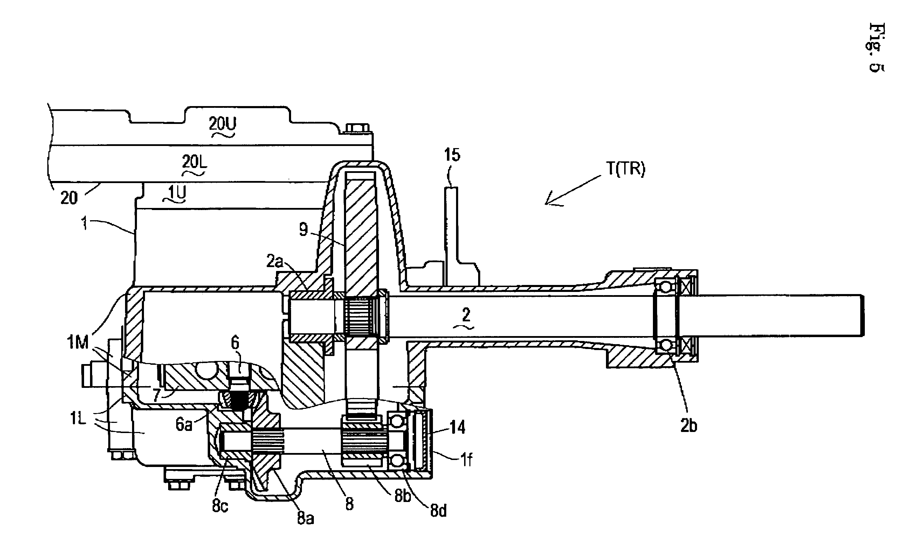

Referring to Figs. 4 and 5, in lower housing part 1 L, a counter shaft 8 serving as the deceleration gear train is journalled in parallel to axle 2, i.e., laterally horizontally. Lower housing part 1L is formed at a right side outer wall thereof with an opening 1f through which counter shaft 8 is assembled into housing 1. Opening 1f is covered with a lid 14 after the assembly. Counter shaft 8 is journalled at a right distal end thereof in opening 1f by the outer wall of lower housing 1 L through a bearing 8d, and at a left proximal end thereof through a bush 8c in a hole bored in the left side outer wall of lower housing 1 L by drilling.

In this way, each of the respective shaft holes for axle 2 and counter shaft 8, except for the bearing portion for the proximal end of axle 2, does not consist of halves formed on the vertically divisional upper and lower housing parts, but is bored in a single member (the shaft hole for axle 2 is bored in only middle housing part 1M, and the shaft hole for counter shaft 8 is bored in only lower housing part 1 L) by drilling or the like. Therefore, the shaft holes are prevented from strain which occurs in a dividable shaft hole caused by error of joining the divisional housing parts.

A structure of the deceleration gear train in housing 1 will now be described with reference to Figs. 4 and 5. A diametrically large gear 9 is spline-fitted onto a portion of axle 2 toward its proximal end. On the other hand, a bevel gear 8a and a final pinion 8b are spline-fitted on counter shaft 8 journalled in lower housing part 1L. Final pinion 8b meshes with diametrically large gear 9, and bevel gear 8a meshes with a bevel motor gear 6a fixed on a motor shaft 6 of later-detailed hydraulic motor 5.

A structure of the HST will be described with reference to Figs. 4 and 7. in housing 1, a flat plate-shaped center section 7 is horizontally disposed so that a pump cylinder block 3a of hydraulic pump 3 and a motor cylinder block 5a of hydraulic motor 5 are slidably rotatably fitted before and behind onto a horizontal top surface of center section 7. Suction-and-delivery ports of cylinder block 3a are fluidly connected to respective suction-and-delivery ports of cylinder block 5a through a pair of oil passages 7a and 7b formed in center section 7.

Incidentally, a rotary bypass valve 8d is fitted into center section 7 so as to be able to communicate with oil passages 7a and 7b. Rotary bypass valve 8d is disposed at a closed valve position when transaxle T normally acts. When the working vehicle has to be towed because of trouble of transaxle T or for another reason, rotary bypass valve 8d is switched to an opened valve position so as to drain delivery fluid of the motor from fluid passages 7a and 7b to the fluid sump in housing 1, whereby drive wheels 2a driven by the ground surface can rotate without receiving a dynamic brake caused by fluid in the HST closed circuit when the vehicle is towed.

Pump shaft (input shaft) 4 is relatively unrotatably fitted into an axial center portion of pump cylinder block 3a. Pump shaft 4 rotatably and vertically penetrates center section 7. A bottom end portion of pump shaft 4 extended downward from a bottom surface of center section 7 is so long as to serve as a drive shaft of a later-discussed charge pump 13. On the other hand, motor shaft 6 is relatively unrotatably fitted into an axial center portion of motor cylinder block 5a. Motor shaft 6 rotatably and vertically penetrates center section 7, and projects at a bottom thereof downward from the bottom surface of center section 7 so as to be fixedly provided thereon with bevel motor gear 6a, as shown in Figs. 4 and 5. Bevel motor gear 6a meshes with bevel gear 8a fixed on counter shaft 8 as mentioned above.

In hydraulic pump 3, pistons 3b are vertically reciprocally fitted into cylinder block 3a around pump shaft 4, and abut at top ends thereof against a bottom surface of a cradle type movable swash plate 3c. In hydraulic motor 5, pistons 5b are vertically reciprocally fitted into cylinder block 5a around motor shaft 6, and abut at top ends thereof against a bottom surface of a fixed swash plate 5c. As mentioned above, upper housing part 1 U is fastened onto the top surface of middle housing part 1 M by bolts so as to cover the top opening of middle housing part 1 M. A portion of upper housing part 1 U serves as a swash plate guide portion 1 a for slidably guiding an arcuately convex surface formed on a back portion of movable swash plate 3c of hydraulic pump 3. A bottom surface of swash plate guide portion 1a is arcuately recessed when viewed in side so as to be provided thereon with an arcuate liner slidably fitted on the arcuately convex top surface of movable swash plate 3c. On the other hand, a back portion of fixed swash plate 5c is fixedly fitted into a fixed swash plate retaining recess 1d formed on a ceiling wall of middle housing part 1 M disposed just below upper housing part 1 U.

As shown in Fig. 7, an arm 15b is fixed on the inner end portion of pump control shaft 15a in housing 1, and engages at one end thereof with movable swash plate 3c. Therefore, movable swash plate 3c is rotated around the axis of pump control shaft 15a by rotating speed control arm 15, so as to control the fluid delivery direction and amount of hydraulic pump 3, thereby controlling the rotary direction and speed of motor shaft 6 serving as an output shaft of the HST.

Further, a neutral-returning spring 18 is wound around pump control shaft 15a in housing 1. A pushing pin 15c is laterally horizontally planted into the other end of arm 15b, and a neutral-positioning pin 19 is laterally horizontally planted into a wall portion of housing 1 (middle housing part 1M). When movable swash plate 3c and speed control arm 15 are disposed at their neutral positions, pins 15c and 19 are nipped between both end portions of neutral-returning spring 18. When speed control arm 15 is rotated from the neutral position, one end portion of neutral-returning spring 18 is pushed by pushing pin 15c rotating together with arm 15b away from the other end portion of neutral-returning spring 18 retained by neutral-positioning pin 19 so as to cause a biasing force of neutral-returning spring 18 for biasing movable swash plate 3c and speed control arm 15 toward their neutral positions, so that movable swash plate 3c and speed control arm 15 smoothly return to their neutral positions when speed control arm 15 is released from an operation force.

Incidentally, neutral-positioning pin 19 is an eccentric pin whose outer end portion projects outward from housing 1 and is fastened to housing 1 by a nut 19a. If there exists an error in alignment between the neutral position of movable swash plate 3c and the neutral position of speed control arm 15, nut 19a is loosened and neutral-positioning pin 19 is rotated so as to eliminate the error,

Movable swash plate 3c and swash plate guide portion 1 a of upper housing part 1U are formed at center portions thereof with vertical penetrating holes through which pump shaft 4 projecting upward from cylinder block 3a is passed. A bearing 4c is disposed just above swash plate guide portion 1a so as to support pump shaft 4. Upper housing part 1 U is formed with a downward (upwardly opened) recess 1c just above bearing 4c. A surface of upper housing part 1U surrounding recess 1c is to be fastened to gear casing 20 (and later-discussed gear casings 40, 50, 70 and 90) by bolts. Pump shaft 4 is passed through recess 1c, and inserted at a top portion thereof into gear casing 20 (or any of gear casings 40, 50, 70 and 90) so as to be fixedly provided thereon with a gear 4a, thereby serving as the input shaft of transaxle T.

Connection holes 1b are bored in a portion of upper housing part 1 U near swash plate guide portion 1a so as to open recess 1 c to a fluid sump formed between middle housing part 1 M and lower housing part 1 L. Further, as shown in Figs. 2 and 4, connection holes 20c are bored in gear casing 20 (a lower casing part 20L of gear casing 20) and opened to recess 1 c, so that a space in gear casing 20 serves as a reservoir tank chamber R. The fluid sump in housing 1 contains fluid serving as hydraulic fluid for the HST and lube for axle 2 and the deceleration gear train. During activation of the HST, the fluid is heated so as to increase in volume. After stopping the HST, the fluid is cooled down and constricted. The differential volume of the fluid is absorbed into reservoir tank chamber R through connection holes 1b and 20c. The fluid flowing into gear casing 20 is used as lube for gears and so on in gear casing 20.

Incidentally, each of later-discussed gear casings 40, 50, 70 and 90 is formed with similar connection holes so as to provide an inner space thereof as reservoir tank R. Of these connection holes, only connection holes 70c of gear casing 70 and connection holes 90c of gear casing 90 are illustrated in Figs. 15 and 19, respectively.

Referring to Figs. 4 and 7, lower housing part 1L is opened at a bottom portion thereof, and a cap 10 is fastened to lower housing part 1 L by bolts so as to cover the bottom opening of lower housing part 1 L. In the state that center section 7 is disposed in housing 1, as shown in Fig. 4 and 7, an upwardly and downwardly opened circular cylindrical fluid filter 11 is interposed between a top surface of cap 10 and the bottom surface of center section 7 in housing 1. A dish-shaped fluid filter retainer 11a engages with cap 10, and fluid filter 11 is fitted at a bottom end thereof into fluid filter retainer 11 a.

A trochoidal charge pump 13 is mounted on the portion of pump shaft 4 projecting vertically downward from the bottom surface of center section 7 inside fluid filter 11, and a charge pump housing 13a supports pump shaft 4 serving as the drive shaft of charge pump 13. Charge pump 13, driven by pump shaft 4, absorbs filtrated fluid from the inside of fluid filter 11 though an opening 13b of charge pump housing 13a, and supplies the fluid through a charge fluid passage 7c opened at the bottom surface of center section 7 into the fluid passage (either lower-pressurized passage 7a or 7b) in center section 7 fluidly connecting hydraulic pump 3 to hydraulic motor 5.

Charge pump housing 13a is anchored to the bottom surface of center section 7 through a rotation-preventing pin (not shown) for preventing charge pump housing 13a from rotating around pump shaft 4, however, charge pump housing 13a is slidable along the rotation-preventing pin in the longitudinal direction of pump shaft 4. The top of charge pump 13 fitted and held in charge pump housing 13a projects upward from the top of charge pump housing 13a. A charge pressure regulating spring 12 is interposed between charge pump housing 13a and fluid filter retainer 11 a so as to bias charge pump housing 13a upward and press charge pump 13 against the bottom surface of center section 7. Therefore, when the delivery fluid pressure of charge pump 13 exceeds the biasing force of spring 12, the excessive fluid pressure is released from the gap between charge pump 13 and the bottom surface of center section 7 joined to each other, and into the inside of fluid filter 11. The pressure of charge pump 13 against the bottom surface of center section 7, i.e., the fluid charge pressure can be changed by exchanging spring 12 for another spring having a different spring force.

A space, serving as a brake chamber, is formed between upper housing part 1 U and an upper portion of fixed swash plate retaining recess 1d of middle housing part 1M. A connection hole 1e is bored in a portion of middle housing part 1M near fixed swash plate retaining recess 1d, so as to be opened to the fluid sump in housing 1, thereby enabling fluid in the fluid sump to naturally flow into the brake chamber. In the brake chamber, a top portion of motor shaft 6 projecting upward from fixed swash plate retaining recess 1d through middle housing part 1M is disposed, and a brake disk 17 is relatively unrotatably fitted on the top portion of motor shaft 6, so as to constitute a wet-type disk brake in the brake chamber.

Upper and lower brake shoes 16b and 16c are disposed along the wall portion of middle housing part 1M formed with fixed swash plate retaining recess 1d and along upper housing part 1U, respectively, so as to sandwich brake disk 17. Laterally horizontal brake control shaft 16a is disposed below lower brake shoe 16b. A sectionally semicircular portion of brake control shaft 16a just under brake shoe 16b serves as a camshaft. When brake control shaft 16a disposed at an unbraking position, as shown in the sectional view thereof in Fig. 4, the camshaft portion has a horizontal flat surface such as to separate brake shoes 16b and 16c from brake disk 17. When brake pedal 113 is depressed, brake arm 16 is rotated to a braking position, so that the camshaft portion of brake control shaft 16a rotates to push up brake shoe 16b, thereby pinching and pressing brake disk 17 between brake shoes 16b and 16c. Consequently, motor shaft 6 is braked so as to stop axle 2.

Description of the structure of transaxle T is concluded. Gear casing 20 adapted to power transmission unit A1 will now be described with reference to Figs. 2, 4 to 7. This embodiment will be described based on the state shown in Figs. 1 and so on, i.e., on the assumption that gear casing 20 is connected onto the top portions of housings 1 of transaxles TL and TR with vertical pump shafts 4.

Lower casing part 20L is fastened onto the tops of the wall portions of housings 1 of transaxles TL and TR surrounding respective recesses 1c by bolts. An upper casing part 20U and lower casing part 20L are vertically joined to each other and fastened together by bolts so as to constitute gear casing 20. A PTO pump housing 21 shown in Fig. 6 is fixed on a top surface of upper casing part 20U.

Further, as shown in Fig. 4, the wall portion of upper casing part 1U is formed with an outwardly opened breather port 20d covered with a breather cap 22, Air in gear casing 20 (i.e., reservoir tank chamber R) above the fluid surface communicates with the outside air through breather port 20d and breather cap 22 so as to keep the normal fluid surface level in gear casing 20 (reservoir tank chamber R) and in housings 1. Such a breather is not illustrated in each of later-discussed gear casings 40, 50, 70 and 90, however, any of these gear casings may be provided with the breather if its inner space serves as reservoir tank R.

As shown in Fig. 2, gear casing 20 is substantially T-like shaped when viewed in plan, such as to have a lateral extended portion centered on vertical primary drive shaft 23 and a fore-and-aft extended portion which is extended rearward from primary drive shaft 23 (in Fig. 2, upper casing part 20U is removed). As mentioned above, the lateral extended portion of gear casing 20 are fastened at left and right ends thereof to tops of housings 1 of respective transaxles TL and TR (i.e., the wall portions of respective upper housing parts 1 U around respective recesses 1 c), so as to support the tops of input shafts (pump shafts) 4 of respective transaxles TL and TR, and incorporate gears 4a fixed on the tops of respective input shafts 4.

The lateral extended portion of gear casing 20 journals vertical primary drive shaft 23 at the lateral center portion thereof. A pulley 23b is fixed onto the above-mentioned portion of primary drive shaft 23 projecting downward from gear casing 20. The traveling gear train from primary drive shaft 23 to respective input shafts (pump shafts) 4 of transaxles TL and TR is disposed in the lateral extended portion of T-like shaped gear casing 20. In this regard, a gear 23a is fixed on primary drive shaft 23 in gear casing 20. Each of a pair of vertical counter shafts 24 is journalled in gear casing 20 between primary drive shaft 23 and each input shaft 4, and a gear 24a is fixed on each counter shaft 24 so as to mesh with gear 23a and corresponding gear 4a.

In this way, the traveling drive train consists of a right gear train from primary drive shaft 23 to input shaft 4 of right transaxle TR and a left gear train from primary drive shaft 23 to input shaft 4 of left transaxle TL, the left and right gear trains being disposed laterally symmetrically. If a belt is used for transmitting power from primary drive shaft 23 to respective input shafts 4, the belt is disadvantageous because the slipping peculiar to the belt reduces the efficiency of power transmission and because it has difficulty in ensuring equality between the power transmission efficiency to left transaxle TL and the power transmission efficiency to right transaxle TR. From this viewpoint, the traveling gear train constructed as the above substantially constantly ensures equality between the power transmission efficiencies to respective transaxles TL and TR.

Further, due to the spanning of gear casing 20 having a sufficient rigidity between housings 1 of respective transaxles TL and TR, power transmission unit A1 obtains a rigidity enough to ensure the unity thereof without additional member for connecting housings 1 to each other.

The fore-and-aft extended portion of gear casing 20 is disposed between left and right transaxles TL and TR, and expanded downward at the rear end portion thereof so as to serve as working apparatus clutch housing portion 20a as mentioned above. As shown in Fig. 6, vertical PTO shaft 27 is journalled in working apparatus clutch housing portion 20a. PTO shaft 27 projects downward from the bottom end of gear casing 20 so as to be fixedly provided thereon with pulley 27b around which working apparatus drive belt 108 is wound as mentioned above. On the other hand, in gear casing 20, a gear 26 is relatively rotatably fitted on PTO shaft 27, and hydraulic working apparatus clutch 30 with a brake 31 is interposed between gear 26 and PTO shaft 27.

In the fore-and-aft extended portion of gear casing 20, a vertical counter shaft 25 is journalled between primary drive shaft 23 and PTO shaft 27. A gear 25a fixed on counter shaft 25 meshes with gear 23a and 26, so as to constitute the working apparatus gear train from primary drive shaft 23 to working apparatus clutch 30. The working apparatus gear train is extended substantially perpendicular to the traveling gear train configured between input shafts 4 and 4.

A structure of working apparatus clutch 30 will now be described with best reference to Fig. 6. A clutch drum 30a is disposed below gear 26 relatively rotatably fitted on PTO shaft 27. Clutch drum 30a includes a drum-shaped outer peripheral portion having an opened top and a closed bottom. Clutch drum 30a also includes a boss-shaped axial center portion fixed onto PTO shaft 27 through a key 30f. Clutch drum 30a is provided therein with a clutch chamber between the boss-shaped portion and the drum-shaped outer peripheral portion. Gear 26 is formed with a splined boss inserted into the clutch chamber of clutch drum 30a. In the clutch chamber of clutch drum 30a, multi friction disks 30c are relatively unrotatably fitted onto the drum-shaped outer peripheral portion of clutch drum 30a, and multi friction disks 30d are relatively unrotatably fitted onto the splined boss of gear 26, so that friction disks 30c and 30d are alternately aligned.

Further, clutch drum 30a incorporates a piston 30b axially (vertically) slidably disposed between the bottom surface portion of clutch drum 30a and the lowest friction disk 30c or 30d. A spring 30e is interposed between piston 30b and the top end of the boss-shaped portion of clutch drum 30a so as to bias piston 30b away from friction plates 30c and 30d (downward). PTO shaft 27 is bored therein with a fluid passage 27a, which is opened to a clutch operation fluid chamber between piston 30b and the bottom surface portion of clutch drum 30a through a penetrating hole bored in the boss-shaped portion of clutch drum 30a. When fluid is supplied into the clutch operation fluid chamber, piston 30b is raised by pressure of the clutch operation fluid against spring 30e, so as to press friction disks 30c and 30d against one another, i.e., to engage working apparatus clutch 30, thereby transmitting rotation of gear 26 to PTO shaft 27. When the fluid is drained from the clutch operation fluid chamber, piston 30b is lowered by the biasing force of spring 30e, so as to separate friction disks 30c and 30d from one another, i.e., to disengage working apparatus clutch 30, thereby isolating PTO shaft 27 from the force of gear 26.

As shown in Fig. 6, a PTO pump housing 21 is fixed onto the top surface of upper casing part 20U of gear casing 20. PTO pump housing 21 is formed with a shaft hole 21 c into which a top portion of PTO shaft 27 is rotatably inserted so that fluid passage 27a is opened in shaft hole 21 c. A top portion of counter shaft 25, which rotates constantly together with primary drive shaft 23, is also rotatably inserted into PTO pump housing 21 so as to serve as a drive shaft of a trochoidal PTO clutch pump 33 disposed in PTO pump housing 21.

PTO pump housing 21 is formed therein with a suction fluid passage to PTO clutch pump 33 and a delivery fluid passage from PTO clutch pump 33. The suction fluid passage is opened outward so as to serve as a suction port 21 a for receiving fluid from a fluid tank (not shown) disposed outside gear casing 20 through a pipe or so on. The delivery fluid passage is extended to a switching valve 34 disposed in PTO pump housing 21. An operation fluid supply passage 21 b is extended from switching valve 34 so as to lead fluid into shaft hole 21 c.

Switching valve 34 interlocks with an operation device (such as a lever) for operating the working apparatus clutch disposed adjacent to driver's seat 111 or at another place. When the operation device is operated to set switching valve 34 to an opened valve position, switching valve 34 supplies fluid delivered from PTO clutch pump 33 into the clutch operation fluid chamber of working apparatus clutch 30 through operation fluid supply passage 21 b, shaft hole 21 c and fluid passage 27a, so as to engage working apparatus clutch 30. When switching valve 34 is set to a closed valve position, switching valve 34 is opened to a drain passage (not shown) so as to drain the fluid delivered from PTO clutch pump 33, and drain fluid from the operation fluid chamber of working apparatus clutch 30 to the drain passage through passage 27a, shaft hole 21c and operation fluid supply passage 21 b, thereby disengaging working apparatus clutch 30.

A vertical cylindrical brake support portion 20b is formed in a bottom portion of working apparatus clutch housing portion 20a of gear casing 20 below working apparatus clutch 30. Brake 30 is disposed in brake support portion 20b so as to interlock with working apparatus clutch 30. Brake shoes 31 b are relatively unrotatably and axially slidably fitted onto brake support portion 20b, brake disks 31a are relatively unrotatably and axially slidably fitted onto PTO shaft 27, and brake disks 31a and brake shoes 31b are alternately aligned so as to constitute wet-type disk brake 31. A pressure disk 31 c is relatively unrotatably and axially slidably fitted onto PTO shaft 27 at the top level of brake 31.

The biasing force of spring 30e is transmitted to pressure disk 31c through piston 30b and a connection pin 32 passed through clutch drum 30a just above pressure disk 31c. Therefore, when piston 30b arises against the biasing force of spring 30e to engage working apparatus clutch 30, the biasing force of spring 30e is not transmitted to pressure disk 31c, thereby separating brake disks 31a and brake shoes 31 b from one another, i.e., setting brake 31 into an unbraking state, whereby brake 31 does not prevent rotation of PTO shaft 27 receiving torque from gear 26 through engaged working apparatus clutch 30. When piston 30b is lowered to disengage working apparatus clutch 30, the biasing force of spring 30e presses brake disk 31a and brake shoes 31 b against one another through pressure disk 31 c so as to set brake 31 into a braking state for preventing inertial rotation of PTO shaft 27.

In this way, in gear casing 20, working apparatus driving power take-off device P1 is configured such as to include gear 26 serving as the input member, PTO shaft 27, working apparatus clutch 30 interposed between gear 26 and PTO shaft 27, brake 31 interlocking with working apparatus clutch 30 to prevent inertial rotation of PTO shaft 27, the mechanism for supplying hydraulic pressure to working apparatus clutch 30 (e.g., the inside structure of PTO pump housing 21), and so on.

In power transmission unit A1, as shown in Fig. 7, common primary drive shaft 23 shared between the traveling gear train and the working apparatus gear train projects downward from the bottom surface of gear casing 20 so as to be fixedly provided thereon with input pulley 23b and cooling fan 23c. Since input pulley 23b is located in the space below gear casing 20 between housings 1 of respective transaxles TL and TR, primary drive shaft 23 can be drivingly connected through belt 106 to output shaft 104 of engine 103 disposed at the lowered position as shown in Fig. 1 while ensuring a sufficient ground clearance below power transmission unit A1. Further, cooling fan 23c disposed in the space between housings 1 efficiently cools both housings 1.

Alternatively, primary drive shaft 23 may project upward from the top surface of gear casing 20 so as to be provided thereon with input pulley 23b if belt 106 has to be disposed higher than the top surface of gear casing 20. Cooling fan 23c may be provided on the portion of primary drive shaft 23 projecting upward from gear casing 20 so as to blow cooling air downward from the position above gear casing 20.

Each of the following described power transmission units A2 to A4 also comprises gear casing 20 spanned between housings 1 of respective transaxles TL and TR, and working apparatus driving power take-off device P1 disposed in gear casing 20, wherein the structure of transaxles TL and TR and the inner structure of gear casing 20 are the same with those of power transmission unit A1. Thus, with respect to these power transmission units, only different points in comparison with power transmission unit A1 will be described.

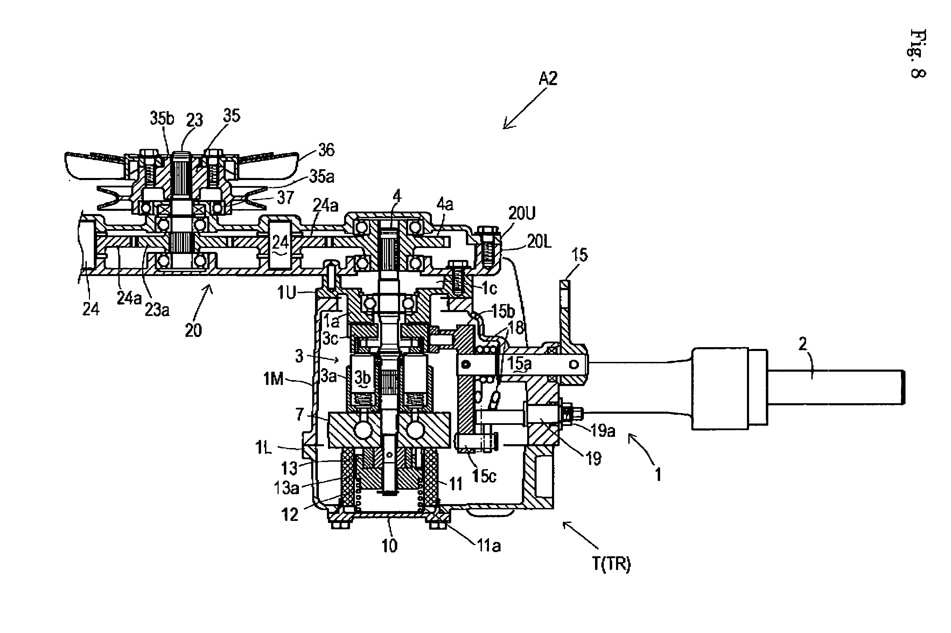

In power transmission unit A2 shown in Fig. 8, a bearing portion of upper casing part 20U of gear casing 20 for bearing of primary drive shaft 23 is extended upward, and a rotary block 35 is relatively rotatably fitted at a bottom portion thereof on the periphery of the upward extended bearing portion through a bearing 37. An input pulley 35a is integrally formed on the outer peripheral bottom portion of rotary block 35. A portion of primary drive shaft 23 projecting upward from gear casing 20 (upper casing part 20U) is fixedly inserted into an upper portion of rotary block 35. Therefore, bearing 37 on gear casing 20 absorbs the belt tension transmitted to input pulley 35a, so as to reduce the belt tension transmitted to primary drive shaft 23. Consequently, primary drive shaft 23, required to have a sufficient diameter to resist the belt tension, can be diametrically small.

Rotary block 35 is formed at a top portion thereof with an upwardly projecting circularly columnar convex 35b inserted into a center hole of a cooling fan 36, and cooling fan 36 is fastened to rotary block 35 by bolts so as to relatively unrotatably engage with primary drive shaft 23 and input pulley 35a. Therefore, while input pulley 35a and cooling fan 36 are aligned vertically, input pulley 35a is disposed on the outer periphery of the bearing portion of upper housing part 20U of gear casing 20 for bearing of primary drive shaft 23, i.e., at a position such as to vertically overlap the bearing portion, thereby reducing the vertical size of cooling fan 36 and input pulley 35a above gear casing 20. This arrangement is appropriate for locating the corresponding power transmission unit in a space having a limited clearance under vehicle frame 101 when primary drive shaft 23 has to project upward from gear casing 20 so as to locate belt 106 above gear casing 20.

Alternatively, in power transmission unit A2, primary drive shaft 23 may project downward from gear casing 20, and rotary block 35 with input pulley 35a, cooling fan 36 and bearing 37 may be provided on the downward projecting portion of primary drive shaft 23. In this case, the bearing portion of upper housing part 20U of gear casing 20 for bearing of primary drive shaft 23 is extended downward so as to be provided thereon with rotary block 35 having input pulley 35a through bearing 37, and cooling fan 36 is provide on the outer periphery of the bottom end of rotary block 35.

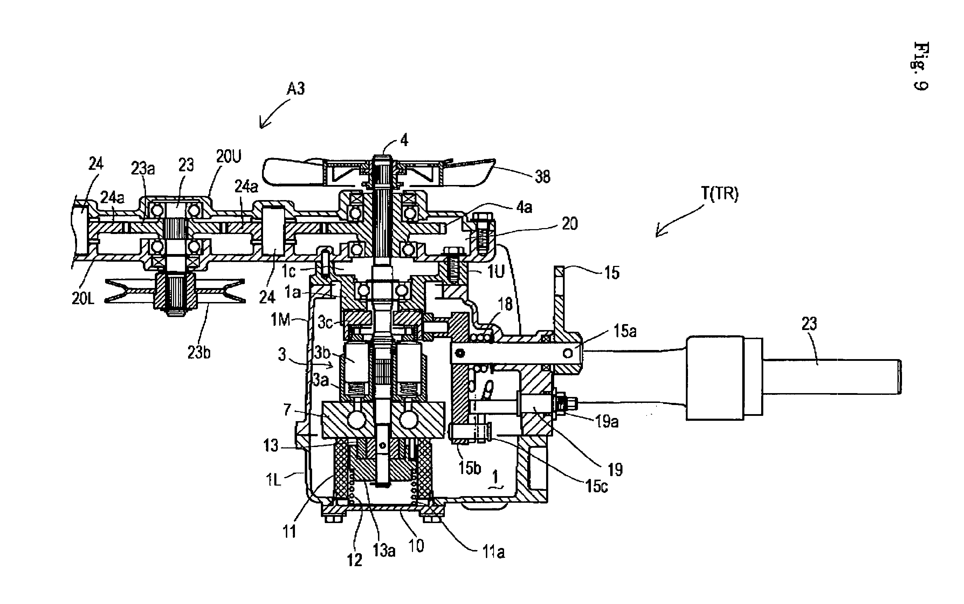

In power transmission unit A3 shown in Fig. 9, while input pulley 23b is provided on the portion of primary drive shaft 23 projecting downward (alternatively, upward) from gear casing 20, cooling fans 38 are provided on respective portions of input shafts (pump shafts) 4 of respective transaxles projecting upward from gear casing 20. Therefore, cooling fans 38 individually provided to respective transaxles TL and TR are disposed in the space above gear casing 20.

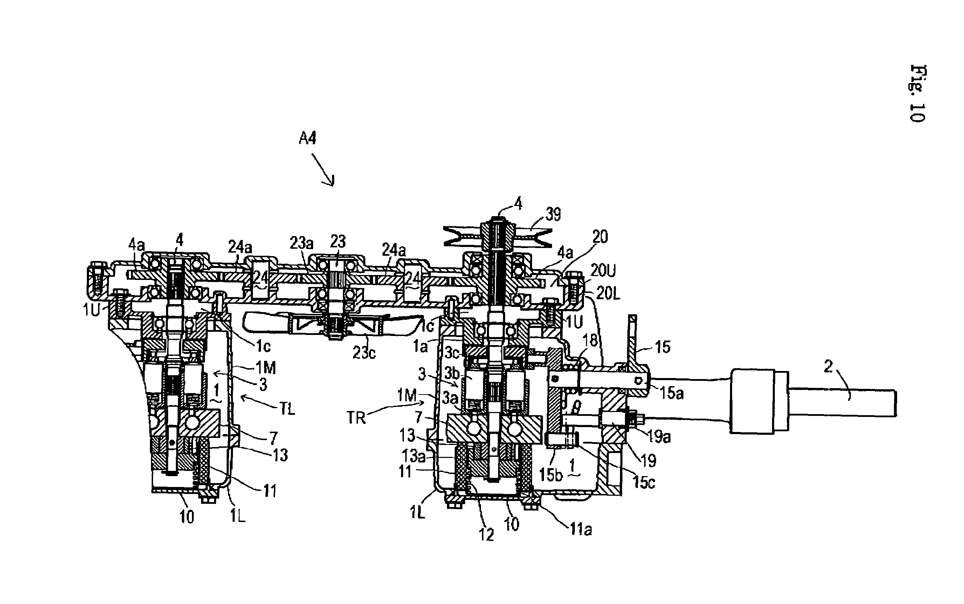

In power transmission unit A4 shown in Fig. 10, input shaft (pump shaft) 4 of one of transaxles TL and TR (in this embodiment, right transaxle TR) projects upward from gear casing 20 so as to be fixedly provided thereon with an input pulley 39, which is drivingly connected to output pulley 105 on engine output shaft 104 through belt 106. Namely, input pulley 4 of one of transaxles T serves as a common primary drive shaft shared between the traveling drive train and the working apparatus drive train.

The gear train disposed in the lateral extended portion of gear casing 20 consists of gears 4a, 24a, 23a, 24a and 4a, and serves as a gear train from input shaft 4 (of right transaxle TR) with input pulley 39 thereon to input shaft 4 of the other transaxle T (left transaxle TL). Namely, in the traveling drive train of power transmission unit A4 from the primary drive shaft to respective transaxles TL and TR, the drive train portion from the primary drive shaft to right transaxle TR consists of only input shaft 4 of right transaxle TR, and the drive train portion from the primary drive shaft to input shaft 4 of left transaxle TL is the gear train consisting of gears 4a, 24a, 23a, 24a and 4a disposed in the lateral extended portion of gear casing 20. In this regard, both gears 4a and 4a rotate in the same direction. Of course, the gear ratio of the gear train has to be set to equalize the rotary speeds of gears 4a to each other.

Gears 25a and 26 consisting the working apparatus gear train are disposed in the fore-and-aft extended portion of gear casing 20, similar to power transmission units A1 to A3. Gear 25a meshes with gear 23a disposed at an intermediate portion (lateral middle) of the gear train in the lateral extended portion. Accordingly, the common gear train portion from gear 4a on input shaft 4 of right transaxle TR to gear 23a serves as both the working apparatus gear train and the gear train to left transaxle TL. In other words, gear 23a serves as a branching point where the working apparatus gear train branches from the gear train from primary drive shaft 4 (of right transaxle TR) to input shaft 4 of left transaxle TL.

In this way, power transmission unit A4 uses input shaft 4 of one transaxle T serving as the common primary drive shaft shared between the traveling drive train and the working apparatus drive train. This primary drive shaft 4 comes to a laterally eccentric position in working vehicle 100. Therefore, when engine 103 is mounted either leftward or rightward (in this embodiment, rightward), input shaft 4 with input pulley 39 thereon is disposed at the corresponding left or right side so that belt 106 can be compactly and smoothly interposed between engine output pulley 105 and input pulley 39. Alternatively, since both counter shafts 24 are rotated integrally with respective gears 24a, one of counter shafts 24 may serve as the primary drive shaft, which projects outward from gear casing 20 so as to be provided thereon with input pulley 39.

In the embodiment of Fig. 10, central rotary shaft 23 projects downward from gear casing 20 so as to be provided thereon with cooling fan 23c for cooling both housings 1 of respective transaxles TL and TR. Alternatively, similar to power transmission unit A3 shown in Fig. 9, input shafts 4 of respective transaxles TL and TR may project upward from gear casing 20 (with respect to right transaxle TR, input shaft 4 has to further project upward higher than the portion thereof on which input pulley 39 is fitted) so as to be provided thereon with respective cooling fans 38. With respect to attachment of input pulley 39 onto input shaft 4, alternatively, rotary block 35 formed with input pulley 35a may be fitted onto input shaft 4 and gear casing 20 through bearing 37, similar to that of power transmission unit A2 shown in Fig. 8. Further alternatively, one or both of counter shafts 24 may project outward from gear casing 20 so as to be provided thereon with a cooling fan or cooling fans.

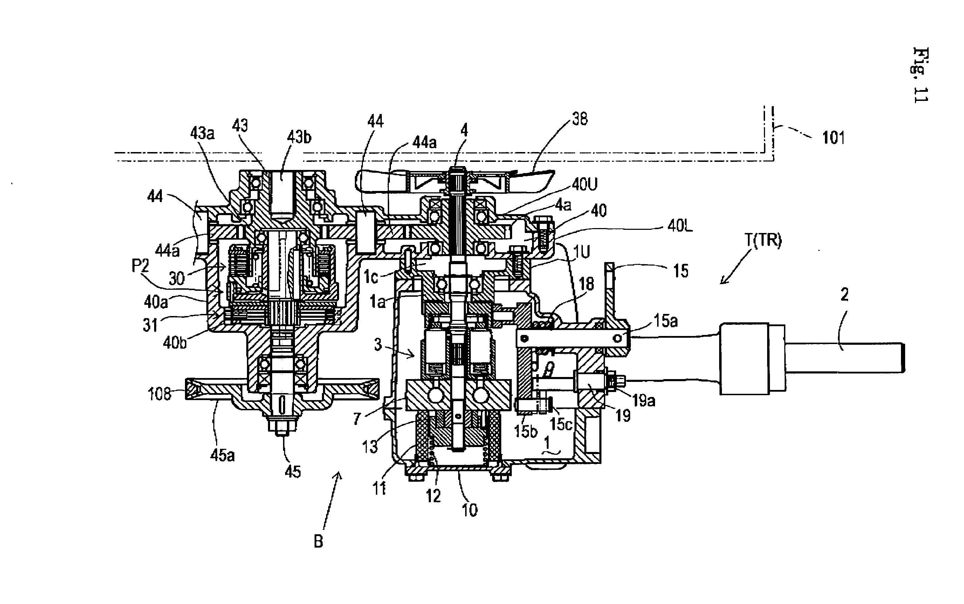

Power transmission unit B shown in Fig. 11 will be described. In power transmission unit B, a gear casing 40 is spanned between transaxles TL and TR identical to those of each of power transmission units A1 to A4. A working apparatus driving power take-off device P2 is disposed in the lateral center portion of gear casing 40. Since this power transmission unit B is adapted to working vehicle 100 equipped with engine 103 having vertical output shaft 104 as shown in Fig. 1, the following description of power transmission unit B is based on the assumption that axles 2 are disposed laterally horizontally, input shafts (pump shafts) 4 are disposed vertically, and gear casing 40 is connected onto the tops of housings 1.

Gear casing 40 consists of a lower casing part 40L and an upper casing part 40U vertically joined to each other. Lower casing part 40L is fastened at left and right end bottom portions thereof onto tops of the wall portions of respective transaxles T (only right transaxle TR is shown in Fig. 11) surrounding respective recesses 1c by bolts. Input shafts 4 of respective transaxles T are inserted at upper portions thereof into gear casing 40, and fixedly provided thereon with respective gears 4a in gear casing 40. Further, input shafts 4 (only input shaft 4 of right transaxle TR is shown in Fig. 11) project upward from gear casing 40 so as to be provided thereon with respective cooling fans 38. Alternatively, a cooling fan may be provided on a downwardly projecting portion of a later-discussed PTO shaft 45 so as to cool both housings 1, instead of cooling fans 38 of respective transaxles TL and TR. Alternatively, one or both of later-discussed counter shafts 44 may project outward from gear casing 40 so as to be provided thereon with a cooling fan or cooling fans.

In gear casing 40, vertical common primary drive shaft 43 is journalled at the lateral middle position between input shafts 4 so as to be shared between the traveling drive train and the working apparatus drive train. An upper portion of primary drive shaft 43 journalled by gear casing 40 projects upward and is formed with an upwardly opened vertical shaft hole 43b. Output engine shaft 104 is extended downward through vehicle frame 101 just above shaft hole 43b so as to be directly fixedly engaged into shaft hole 43b. Namely, in power transmission unit B, the working apparatus drive train consists of only primary drive shaft 43 directly and coaxially connected to engine output shaft 104. A gear 43a is formed on the outer periphery of a lower portion of primary drive shaft 43 disposed in gear casing 40.

A pair of vertical counter shafts 44 and 44 are journalled in gear casing 40 so that each counter shaft 44 is disposed between primary drive shaft 43 and input shaft 4 of each transaxle T. A gear 44a is fixed on each counter shaft 44 and meshes with gear 43a and gear 4a on each input shaft 4. In this way, the traveling gear train from primary drive shaft 43 to the input shafts 4 of respective transaxles TL and TR is disposed laterally in gear casing 40.

A bottom surface of gear casing 40 below primary drive shaft 43 is extended downward so as to form a working apparatus clutch housing portion 40a. Vertical PTO shaft (power take-off shaft) 45 is journalled in working apparatus clutch housing portion 40a and relatively rotatably fitted at a top thereof into a bottom portion of primary drive shaft 43. Hydraulic working apparatus clutch 30, similar to that interposed between gear 26 and PTO shaft 27 in gear casing 20, is disposed in working apparatus clutch housing portion 40a and interposed between primary drive shaft 43 and PTO shaft 45. A brake support portion 40b is formed at a bottom portion of working apparatus clutch housing portion 40a. Brake 31 for preventing inertial rotation of PTO 45, similar to that supported onto brake support portion 20b in gear casing 20, is fitted onto brake support portion 40b and interlocks with working apparatus clutch 30.

A hydraulic fluid support mechanism for working apparatus clutch 30, not shown in Fig. 11, may be disposed in gear casing 40, similar to the mechanism inside PTO pump housing 21 of gear casing 20. A hydraulic fluid passage is bored in PTO shaft 45 so as to be opened to the clutch operation fluid chamber of working apparatus clutch 30, similar to that in PTO shaft 27.

In this way, in power transmission unit B, gear casing 40 incorporates working apparatus driving power take-off device P2, which includes primary drive shaft 43 serving as the input member thereof, PTO shaft 45, hydraulic working apparatus clutch 30 interposed between shafts 43 and 45, and brake 31 for braking PTO shaft 45. Primary drive shaft 43, drivingly connected to engine 103 and distributing power between transaxles TL and TR, serves as the input member of working apparatus driving power take-off device P2 by itself, so that the working apparatus drive train consists of only primary drive shaft 43, thereby ensuring minimization of power transmission unit B.

PTO shaft 45 projects downward from the bottom end of gear casing 40 so as to be fixedly provided thereon with a pulley 45a around which belt 108 for driving connection with a working apparatus (e.g., mower unit 109).

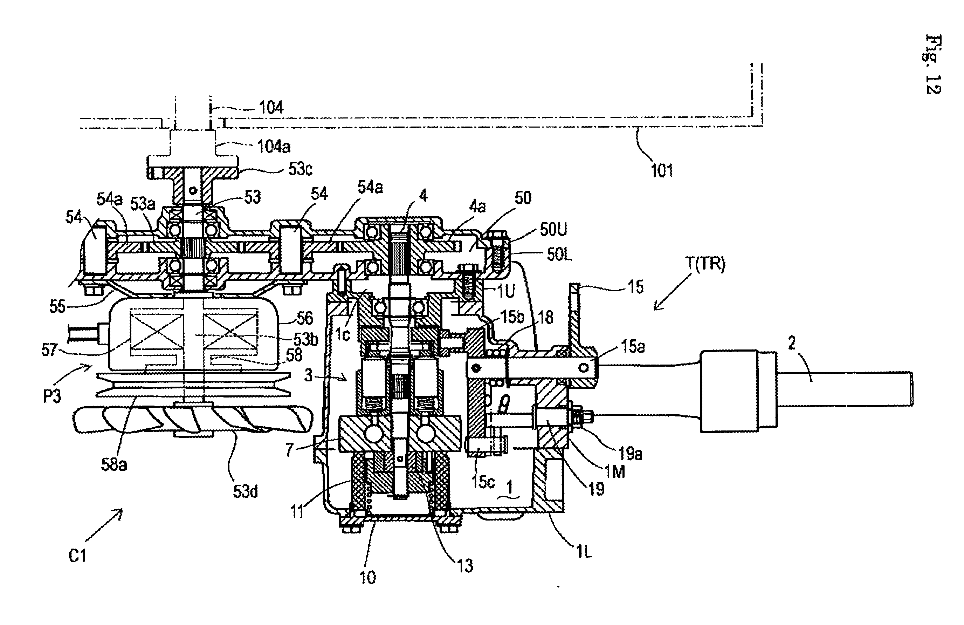

Power transmission unit C1 shown in Fig. 12 will be described. In power transmission unit C1, gear casing 50 is spanned between housings 1 of respective transaxles TL and TR, and a working apparatus driving power take-off device P3 is continuously connected to gear casing 50. Since this power transmission unit C1 is also adapted to working vehicle 100 equipped with engine 103 having vertical output shaft 104 as shown in Fig. 1, the following description of power transmission unit C1 is based on the assumption that axles 2 are disposed laterally horizontally, input shafts (pump shafts) 4 are disposed vertically, and gear casing 50 is connected onto the tops of housings 1.

Gear casing 50 consists of a lower casing part 50L and an upper casing part 50U vertically joined to each other. Lower casing part 50L is fastened at left and right end bottom portions thereof onto tops of the wall portions of respective transaxles T (only right transaxle TR is shown in Fig. 12) surrounding respective recesses 1c by bolts. Input shafts 4 of respective transaxles T are inserted at upper portions thereof into gear casing 50, and fixedly provided thereon with respective gears 4a in gear casing 50.

In gear casing 50, vertical common primary drive shaft 53 is journalled at the lateral middle position between input shafts 4 so as to be shared between the traveling drive train and the working apparatus drive train. Primary drive shaft 53 is formed at a top thereof with a flange 53c. Flange 53c projects upward from gear casing 50, and is fixed to a flange 104a formed on the bottom end of engine output shaft 104 extended downward through vehicle frame 101 just above flange 53c. Namely, in power transmission unit C1, the working apparatus drive train consists of only primary drive shaft 53, directly and coaxially connected to engine output shaft 104, and a later-discussed clutch drive shaft 53b coaxially and fixedly connected to primary drive shaft 53.

In gear casing 50, a gear 53a is formed on primary drive shaft 53. A pair of vertical counter shafts 54 and 54 are journalled in gear casing 50 so that each counter shaft 54 is disposed between primary drive shaft 53 and input shaft 4 of each transaxle T. A gear 54a is fixed on each counter shaft 54 and meshes with gear 53a and gear 4a on each input shaft 4. In this way, the traveling gear train from primary drive shaft 53 to the input shafts 4 of respective transaxles TL and TR is disposed laterally in gear casing 50.

A clutch casing 56 is hung from a bottom surface of gear casing 50 through a bracket 55. Primary drive shaft 53 is extended downward from gear casing 50 and fixedly connected to a top of clutch drive shaft 53b joumalied in clutch casing 56 disposed coaxially to primary drive shaft 53. Clutch drive shaft 53b is extended at a bottom portion thereof downward from the bottom surface of clutch casing 56, so as to be fixedly provided thereon with a cooling fan 53d for cooling both housings 1. Alternatively, input shafts 4 of both transaxles TL and TR may project upward from gear casing 50 so as to be provided thereon with respective cooling fans 38, instead of cooling fan 53d. Alternatively one or both of counter shafts 54 may project outward from gear casing 50 so as to be provided thereon with a cooling fan or cooling fans.

In clutch casing 56, a cylindrical clutch driven shaft, i.e., a PTO shaft (power take-off shaft) 58 is coaxially and relatively rotatably fitted around clutch drive shaft 53b, and an electromagnetic working apparatus clutch 57 is interposed between PTO shaft 58 and clutch drive shaft 53b. Working apparatus clutch 57 is connected to a controller through a cable extended from clutch casing 56, so as to be switched between an engaging state and a disengaging state by the controller. PTO shaft 58 projects downward from the bottom surface of clutch casing 56 so as to be formed (or fixedly provided) on a bottom end thereof with a pulley 58a around which belt 108 is wound. In this way, working apparatus driving power take-off device P3 of power transmission unit C1 comprises primary drive shaft 53 serving as the input member thereof, clutch drive shaft 53b and PTO shaft (clutch driven shaft) 58 disposed coaxially to primary drive shaft 53, electromagnetic working apparatus clutch 57 interposed between shafts 53b and 58, and so on.

Power transmission unit C2 shown in Fig. 13 will be described. Power transmission unit C2 of Fig. 13 is vertically reversed power transmission unit C1 plus additional arrangement. Each transaxle T (only right transaxle TR is shown in Fig. 13) is disposed so as to locate lower housing part 1L above middle housing part 1M, and locate middle housing part 1 M above upper housing part 1U, and gear casing 50 is disposed so as to locate lower casing part 50L above upper casing part 50U, and fixed onto the bottom ends of the wall portions surrounding the respective recesses 1c disposed at the bottom ends of respective transaxles T.

A sectionally arcuate bracket 59 is mounted upright on a top surface of lower casing part 50L of gear casing 50 (disposed above upper casing part 50U in this embodiment). Clutch casing 56 is fixed at a top surface thereof onto a ceiling portion of bracket 59 so as to be disposed above gear casing 50, so that pulley 58a formed (or fixed) on the bottom end of PTO shaft 58 is disposed between the bottom end of clutch casing 56 and the top surface of gear casing 50.

Primary drive shaft 53 projecting upward from the top surface of gear casing 50 is fixedly connected to a bottom end of clutch drive shaft 53b penetrating clutch casing 56. In clutch casing 56. cylindrical PTO shaft 58 is relatively rotatably provided around clutch drive shaft 53b, and electromagnetic working apparatus clutch 57 is interposed between shafts 53b and 58 so as to selectively drivingly connect or disconnect each other. Clutch drive shaft 53b is further extended upward from the top surface of clutch casing 56 through bracket 59, so as to be fixedly provided thereon above bracket 59 with flange 53c which can be engaged to flange 104a on the bottom end of engine output shaft 104.

Cooling fan 53d is fixed on clutch drive shaft 53b between flange 53c and bracket 59 so as to cool both housings 1. Alternatively, cooling fans 38 may be provided on input shafts 4 of respective transaxles T. If this alternative arrangement is adapted to this embodiment, cooling fans 38 have to be provided on portions of input shafts 4 extended downward from upper housing parts 1U disposed at the bottoms of respective transaxles T and through gear casing 50 fixed onto the bottom surfaces of upper housing parts 1 U. Alternatively one or both of counter shafts 54 may project outward from gear casing 50 so as to be provided thereon with a cooling fan or cooling fans.

As mentioned above, similar to gear casing 20, gear casing 50 is formed with connection holes opened to the fluid sumps in respective transaxles T, thereby being constantly full of fluid. Therefore, in comparison with the above embodiment in which gear casing 50 is used for volumetrically regulating the fluid sumps in respective housings 1, this embodiment has a different point that the opening of lower housing part 1 L disposed at the top of each transaxle T (above middle housing part 1 M), through which fluid filter 11 or the like is passed for assembly or disassembly, is plugged by a cap 60 with an outwardly opened port 60a, instead of cap 10. Pipes 61 are extended from an external reservoir tank 62 disposed on the outside of power transmission unit C2, and connected to respective ports 60a, so that external reservoir tank 62 can absorb the differential volume of the fluid sumps of respective housings 1.

As mentioned above, in each of power transmission units B, C1 and C2, primary drive shaft 43 or 53 shared between the traveling drive train and the working apparatus drive train serves as the upstream side drive shaft of each of working apparatus clutches 30 and 57, i.e., the input member of each of working apparatus power driving power take-off devices P2 and P3, so as to omit a gear train serving as the working apparatus drive train, thereby minimizing gear casing 40 or 50,

Further, each of primary drive shafts 43 and 53 (or clutch drive shaft 53b) is directly connected to engine output shaft 104 so as to extremely efficiently receive the output power of the prime mover. Alternatively, in each of power transmission units B, C1 and C2, an input pulley may be provided on primary drive shaft 43 or 53 (or clutch drive shaft 53b) so as to be drivingly connected to the engine output shaft through a belt transmission mechanism as shown in power transmission unit A1 or so on.

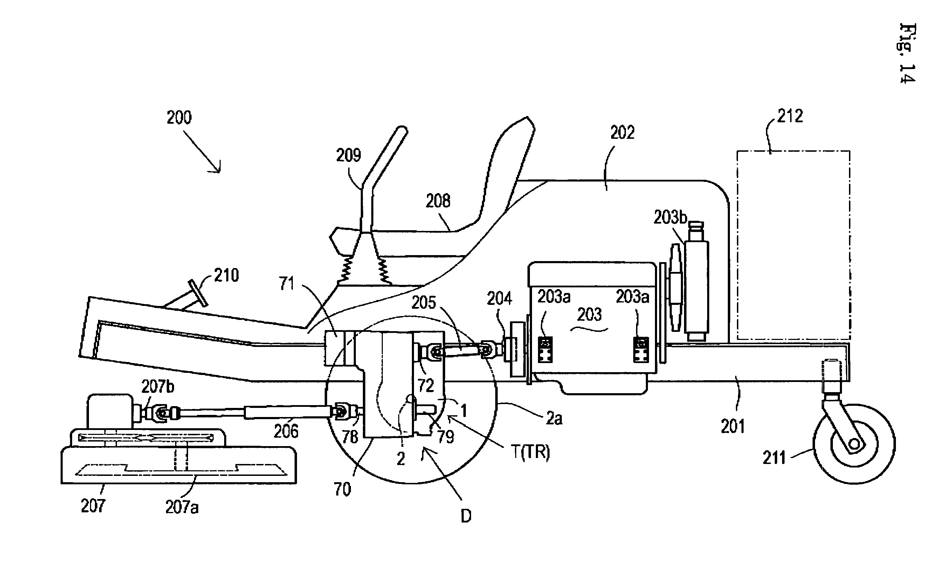

A working vehicle (riding lawn mower) 200 equipped with power transmission unit D shown in Fig. 14 will now be described before description of power transmission unit D shown in Figs. 14 to 17. Working vehicle 200 is provided with a vehicle frame 201 including a pair of left and right fore-and-aft extended side plate portions, between which an engine 203 serving as a prime mover is disposed and supported on the side plate portions through vibration isolating rubbers 203a. Engine 203 includes a forwardly extended horizontal output shaft 204. A radiator 203b is disposed behind engine 203.

Power transmission unit D, including left and right symmetric transaxles TL and TR (only right transaxle TR is shown in Fig. 14) and gear casing 70 spanned between housings 1 of respective transaxles TL and TR, is disposed between the left and right side plate portions of frame 201 in front of engine 203. In each of transaxles TL and TR, housing 1 supports single axle 2, and drive wheel 2a is provided on an outer end of axle 2. Casters 211 serving as follower wheels are supported at a rear end of vehicle frame 201, Normally, two left and right casters 211 are applied. Alternatively, only single caster 211, or casters 211 more than two may be applied.

A mower unit 207 is vertically movably hung forwardly downward from frame 201 in front of power transmission unit D. Mower unit 207 includes mowing rotary blades 207a, and is provided with a horizontal input shaft 207b projecting rearward from an upper portion thereof so as to drive rotary blades 207a.

A common primary drive shaft 72 for drive of axles 2 and for drive of rotary blades 207a of mower unit 207 projects horizontally rearward and is connected to engine output shaft 204 through a propeller shaft 206 and universal joints. Propeller shaft 206 and the universal joints efficiently transmit rotation of engine output shaft 204 to primary drive shaft 72 in comparison with a belt transmission mechanism whose transmission efficiency is reduced by slipping or wearing of a belt.

Further, in power transmission unit D, a mid PTO shaft 78 projects horizontally forward from a lower portion of gear casing 70, and a rear PTO shaft 79 projects horizontally rearward from the lower portion of gear casing 70 opposite to mid PTO shaft 78. Mid PTO shaft 78 is connected to input shaft 207b of mower unit 207 through propeller shaft 206 and the universal joints. Rear PTO shaft 79 is used for driving an unshown blower for transferring grass mowed by rotary blades 207a of mower unit 207 into a later-discussed grass collection box 212 or for another purpose. An unshown hydraulic actuator for lifting mower unit 207 is provided, and a hydraulic pressure supply mechanism for the hydraulic lifting actuator is disposed in a pump housing 71 fixed on an upper front portion of gear casing 70.

An engine room 202, incorporating engine 203 and so on, is configured above a rear portion of frame 201 of working vehicle 200. A driver's seat 208 is disposed just in front of engine room 202, and a pair of left and right control levers 209 are disposed on left and right sides of driver's seat 208, respectively. Each of control levers 209 interlocks with speed control arm 15 (see Fig. 15) pivoted on housing 1 of each transaxle T, similar to each of controls 112 of working vehicle 140 shown in Fig. 1. In each transaxle T, the output rotary speed and direction of the HST disposed in corresponding housing 1 are controlled according to the tilt angle and direction of corresponding control lever 209 and speed control arm 15, thereby controlling the rotary speed and forward/backward rotary direction of axle 2. By differentially tilting control levers 209 in the tilt angle and direction, transaxles TL and TR cause differential output rotary speed and direction corresponding to the differential tilt between control levers 209, thereby differentially rotating left and right axles 2 for left or right turning of vehicle 200. When control levers 209 are tilted to equal speed level positions in directions for forward traveling and backward traveling opposite to each other, working vehicle 200 zero-turns around the central point of a tread between left and right drive wheels 2a.

A brake pedal 210 is disposed at a portion above vehicle frame 201 in front of driver's seat 208. Transaxles T are provided with respective brakes for braking respective axles 2, as mentioned later. Brake arms 16 (see Fig. 15) for operating the brakes pivoted on housings 1 of respective transaxles T are operatively connected to common brake pedal 210, so that the brakes of respective transaxles TL and TR are simultaneously applied by depressing common brake pedal 210.

Grass collection box 212 is mounted onto a rear end portion of vehicle frame 201 behind engine room 202 so that, as mentioned above, the unshown blower sends grass mowed by mower unit 207 into grass collection box 212.

Power transmission unit D will now be described with reference to Figs. 15 to 17, on the assumption that each transaxle T is disposed so that the HST including fore-and-aft horizontal pump shaft 4 and motor shaft 6 is disposed above lateral horizontal axle 2, and that upper housing part 1 U is disposed at the front end of transaxle T.

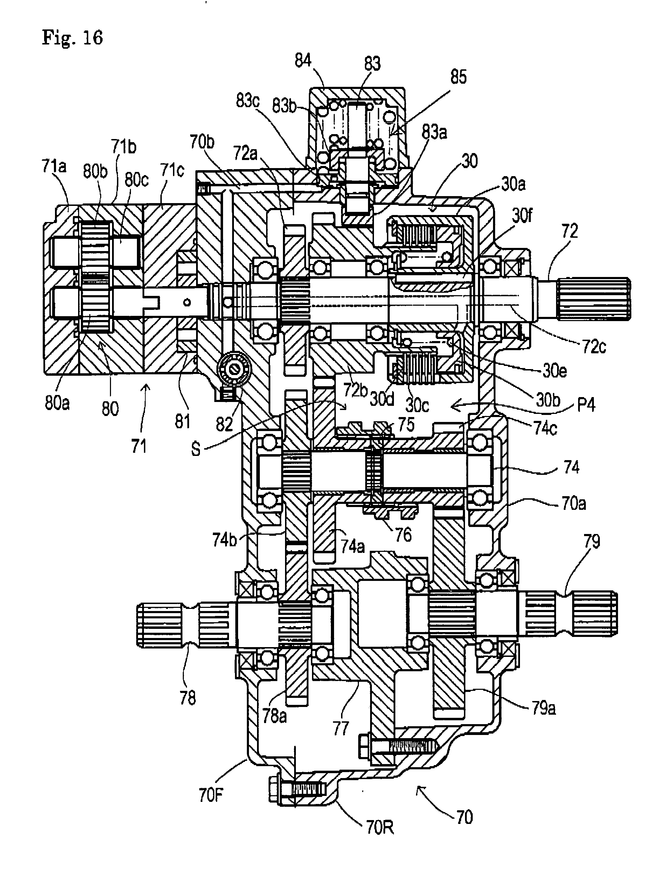

Power transmission unit D is configured so that gear casing 70 incorporating a working apparatus driving power take-of device P4 is spanned between housings 1 of transaxles TL and TR. A rear casing part 70R is fastened onto front end surfaces of the wall portions of respective housings 1 of transaxles TL and TR around respective recesses 1c by bolts, and rear casing part 70R and a front casing part 70F are joined to each other in the fore-and-aft direction and fastened to each other by bolts, thereby constituting gear casing 70. Front casing part 70F is fixedly provided on a front surface thereof with pump housing 71 shown in Fig. 16.

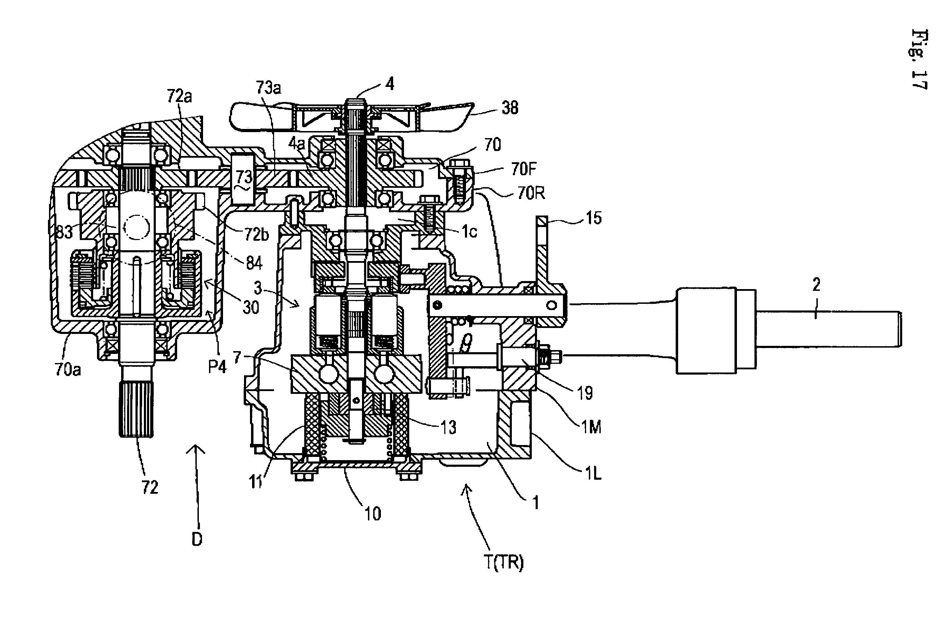

As shown in Fig. 15 (illustrating a state of gear casing 70 from which front casing part 70F has been removed), while gear casing 70 is provided at the central portion thereof with primary drive shaft 72, gear casing 70 is substantially T-like shaped when viewed in front, such as to have a lateral extended portion, whose center portion coincides to the central portion of gear casing 70 housing primary drive shaft 72, and have a vertical extended portion extended downward from the portion of gear casing 70 housing primary drive shaft 72. The vertical extended portion is extended vertically between housings 1 of respective transaxles TL and TR. The lateral extended portion of gear casing 70 includes left and right end portions, which are fastened onto respective front end portions of housings 1 of transaxles TL and TR (the wall portions of upper housing parts 1 U around respective recesses 1c). The left and right end portions of the lateral extended portion of gear casing 70 journal respective front end portions of input shafts 4, and incorporate respective gears 4a fixed on the respective front end portions of input shafts 4. Input shafts 4 project forward from gear casing 70 so as to be fixedly provided thereon with respective cooling fans 38, as shown in Fig. 17 (illustrating only input shaft 4 of right transaxle TR).

Fore-and-aft horizontal primary drive shaft 72 is journalled at the lateral middle of the lateral extended portion of gear casing 70 and projects rearward from a rear surface of gear casing 70 as mentioned above, so as to be connected to propeller shaft 206 through the universal joint, as shown in Fig. 14. The lateral extended portion of T-like shaped gear casing 70 incorporates a traveling gear train from primary drive shaft 72 to respective input shafts (pump shafts) 4 of transaxles TL and TR. In this regard, a gear 72a is fixed on primary drive shaft 72 in gear casing 70, and a pair of fore-and-aft horizontal counter shafts 73 are journalled in gear casing 70 so that each counter shaft 73 is disposed between primary drive shaft 72 and each input shaft 4. Each of gears 73a fixed on respective counter shafts 73 meshes with gear 72a and corresponding gear 4a.

In this way, in the traveling drive train, a right gear train is extended from primary drive shaft 72 to input shaft 4 of right transaxle TR, and a left gear train is extended from primary drive shaft 72 to input shaft 4 of left transaxle TL, so that the left and right gear trains are laterally symmetric, thereby substantially constantly ensuring equality of input rotary speed between transaxles TL and TR. Due to the spanning of gear casing 70 having a sufficient rigidity between housings 1 of transaxles TL and TR, power transmission unit D has a sufficient rigidity for keeping its utility without an additional member for connecting housings 1 to each other.

The vertical extended portion of gear casing 70 is extended between housings 1 so that the bottom end thereof reaches a level adjacent to the bottom ends of transaxles T, defining the minimum ground clearance of vehicle 200 as shown in Figs. 16 and 17. Therefore, the vertical extended portion of gear casing 70 serves as a PTO drive train housing portion 70a incorporating working apparatus driving power take-off device P4 including PTO shafts 78 and 79, working apparatus clutch 30, a brake shaft 83 interlocking with working apparatus clutch 30, and gear trains from working apparatus clutch 30 to respective PTO shafts 78 and 79. Hydraulic working apparatus clutch 30, similar to those of power transmission units A1 to A4 and B, is disposed around primary drive shaft 72 in an upper portion of PTO drive train housing portion 70a (behind the lateral middle of the lateral extended portion of gear casing 70).

In working apparatus clutch 30, the boss-shaped portion of clutch drum 30a is relatively unrotatably fitted on primary drive shaft 72 through key 30f. Gear 72a constituting the traveling gear train is fixed on primary drive shaft 72 adjacent to the front end wall of gear casing 70 (front casing part 70F). A gear 72b is relatively rotatably provided on primary drive shaft 72 between gear 72a and clutch drum 30a of working apparatus clutch 30. Gear 72b is extended rearward so as to be formed at a rear end portion thereof with a splined boss inserted into clutch drum 30a. In clutch drum 30a, multi friction disks 30c are relatively unrotatably and axially slidably fitted onto clutch drum 30a, and multi friction disks 30d are relatively unrotatably and axially slidably fitted onto the splined boss of gear 72b, so that friction disks 30c and 30d are alternately aligned. Piston 30b disposed behind friction disks 30c and 30d is slid forward for pressing friction disks 30c and 30d against one another (for engaging working apparatus clutch 30), and slid rearward for separating friction disks 30c and 30d from one another (for disengaging working apparatus clutch 30).

In this way, primary drive shaft 72 serves as an input member of working apparatus driving power take-off device P4 of power transmission unit D, i.e., an upstream side drive shaft of working apparatus clutch 30, so that the working apparatus drive train from the primary drive shaft to the input member of working apparatus driving power take-off device P4 consists of only primary drive shaft 72, thereby saving expansion of gear casing 70.

Spring 30e biases piston 30b rearward opposite to friction disks 30c and 30d (i.e., for disengaging the clutch). The clutch operation fluid chamber is formed in clutch drum 30a behind piston 30b. When fluid is supplied into the clutch operation fluid chamber through fluid passage 72c bored in primary drive shaft 72, the fluid pushes piston 30b forward for engaging working apparatus clutch 30, whereby clutch drum 30a, which is rotatable integrally with primary drive shaft 72, is drivingly connected to gear 72b. On the other hand, when fluid is drained from the clutch operation fluid chamber, piston 30b slides rearward to disengage working apparatus clutch 30, so as to isolate gear 72b from the rotary force of primary drive shaft 72.

An outer housing part 71a, a middle housing part 71 b and an inner housing part 71 c are joined to one another in the fore-and-aft direction so as to constitute pump housing 71 incorporating a tandem pump (a series connection of a PTO clutch pump 81 and a working apparatus driving pump 80). Inner housing part 71c is joined at a rear surface thereof to an upper front surface of gear casing 70. Primary drive shaft 72 rotatably penetrates inner housing part 71 c and middle housing part 72b, and is inserted at a front end portion thereof into outer housing part 71 a. Trochoid type PTO clutch pump 81 is disposed within inner hosing part 71c so as to supply fluid into the clutch operation fluid chamber of working apparatus clutch 30 while primary drive shaft 72 serves as the drive shaft of PTO clutch pump 81.

A fluid passage is bored within an upper front portion of gear casing 70 from PTO clutch pump 81 to fluid passage 72c in primary drive shaft 72, and provided at the midway portion thereof with a switching valve 82. When switching valve 82 is set at an opened valve position, fluid from PTO clutch pump 81 is supplied into the clutch operation fluid chamber of working apparatus clutch 30 through fluid passage 72c. When switching valve 82 is set at a closed valve position, fluid delivered from PTO clutch pump 81 and fluid from the clutch operation fluid chamber of working apparatus clutch 30 are drained through fluid passage 72c so as to disengage working apparatus clutch 30.

A pump driven shaft 80c is journalled within middle housing part 71b and outer housing part 71 a in parallel to primary drive shaft 72. In middle housing part 71b, a gear 80a is fixed on a pump drive shaft connected to primary drive shaft 72, a gear 80b is fixed on pump driven shaft 80c, and gears 80a and 80b mesh with each other so as to constitute circumscribed gear type working apparatus driving pump 80. In this embodiment, working apparatus driving pump 80 is used for the above-mentioned hydraulic actuator for vertically moving mower unit 207, i.e., supplies fluid to the actuator through an unshown directive control valve.

A brake pin 83 axially slidably penetrates a wall portion of gear casing 70 (rear casing part 70R) in perpendicular to primary drive shaft 72, and a brake shoe 83a is provided on an inner end of brake pin 83 so as to face gear 72b. Further, an accumulator housing 84 projects outward from an outer surface of gear casing 70 (rear casing part 70R), and brake pin 83 is inserted at an outer end portion thereof into accumulator housing 84. Accumulator housing 84 is provided therein with a brake operating spring chamber. In this regard, accumulator housing 84 incorporates pistons 83b and 83c, provided on brake pin 83, and springs for biasing brake pin 83 and brake shoe 83a through respective pistons 83b and 83c. In this way, in accumulator housing 84, these springs and pistons 83b and 83c constitute an accumulator 85 for absorbing the shock when working apparatus clutch 30 is engaged.

In addition to the fluid passage extended from switching valve 82 for supplying fluid passage 72c with fluid for operating working apparatus clutch 30, a fluid passage 70b for supplying fluid for operating brake pin 83 is formed within a wall portion of gear casing 70 so as to be extended from switching valve 82 to the brake operation fluid chamber in accumulator housing 84.

When switching valve 82 is set at the opened valve position, the fluid delivered from PTO clutch pump 81 is supplied into the clutch operation fluid chamber of working apparatus clutch 30 so as to engage working apparatus clutch 30. Further, simultaneously to the fluid supply into the clutch operation fluid chamber of working apparatus clutch 30, fluid is supplied to the brake operation fluid chamber in accumulator housing 84 through fluid passage 70b so as to push pistons 83b and 83c against the springs in accumulator housing 84, thereby separating brake shoe 83a from the outer peripheral surface of gear 72b. At this time, pistons 83b and 83c differentially move due to the difference of biasing force between the respective springs, so as to form an accumulator fluid chamber between pistons 83b and 83c, into which a part of fluid in the brake operation fluid chamber is introduced. During the introduction of fluid into the accumulator fluid chamber, the fluid supply pressure to the clutch operation fluid chamber of working apparatus clutch 30 is reduced so as to reduce the movement speed of piston 30b toward friction disks 30c and 30d, thereby reducing the shock when working apparatus clutch 30 is engaged.

On the other hand, when switching valve 82 is set at the closed valve position, switching valve 82 drains the fluid delivered from PTO clutch pump 81, the fluid from the clutch operation fluid chamber of working apparatus clutch 30, and the fluid from the brake operation fluid chamber. Accordingly, working apparatus clutch 30 is disengaged, and brake pin 83 is moved toward gear 72b by the biasing forces of the springs applied on respective pistons 83b and 83c so as to press brake shoe 83a against gear 72b, thereby preventing inertial rotation of gear 72b.

A gear train from gear 72b to both PTO shafts 78 and 79 in working apparatus driving power take-off device P4, configured in PTO drive train housing part 70a of gear casing 70, will be described with reference to Fig. 16. In gear casing 70, a bearing block 77 is fixed, and mid PTO shaft 78 and rear PTO shaft 79 are disposed before and behind (in parallel to primary drive shaft 72) so as to be journalled at inner ends thereof through respective bearings in bearing block 77. Mid PTO shaft 78 projects at an outer end thereof forward a front wall of front housing part 70F, and rear PTO shaft 79 projects at an outer end thereof rearward a rear wall of rear housing part 70R.

In gear casing 70 (PTO drive train housing part 70a), counter shaft 74 is fore-and-aft journalled between primary drive shaft 72 and PTO shafts 78 and 79 in parallel, and a splined hub 75 is relatively unrotatably fitted on a fore-and-aft intermediate portion of counter shaft 74. A gear 74a is relatively rotatably fitted on counter shaft 74 in front of splined hub 75, and meshes with gear 72b. A gear 74b is fixed on counter shaft 74 in front of gear 74a, and meshes with a gear 78a fixed on mid PTO shaft 78. A gear 74c is relatively rotatably fitted on counter shaft 74 behind splined hub 75, and meshes with a gear 79a fixed on rear PTO shaft 79.

A slide shifter 76 is axially slidable (in the fore-and-aft direction) and engageable with clutch teeth formed on gear 74a, the spline of splined hub 75, and clutch teeth formed on gear 74a. Gear 74a rotates following gear 72b while working apparatus clutch 30 is engaged.

Slide shifter 76 is selectively shiftable among four positions, i.e., a both PTO shafts driving position, a rear PTO shaft driving position, a mid PTO shaft driving position and a neutral position. Slide shifter 76, set at the both PTO shafts driving position, meshes with the clutch teeth of gear 74a, the spline of splined hub 75 and the clutch teeth of gear 74c, so as to transmit the rotation of gear 74a to mid PTO shaft 78 through slide shifter 76, splined hub 75, counter shaft 74 and gears 74b and 78a, and to rear PTO shaft 79 through slide shifter 76 and gears 74c and 79a. Slide shifter 76, set at the rear PTO shaft driving position, is separated from the spline of splined hub 75, and meshes with the clutch teeth of gear 74a and the clutch teeth of gear 74c, so as to transmit the rotation of gear 74a to only rear PTO shaft 79 through slide shifter 76 and gears 74c and 79a. Slide shifter 76, set at the mid PTO shaft driving position, is separated from the clutch teeth of gear 74c, and meshes with the clutch teeth of gear 74a and the spline of splined hub 75, so as to transmit the rotation of gear 74a to only mid PTO shaft 78 through slide shifter 76, splined hub 75 and gears 74b and 78a. Slide shifter 76, set at the neutral position, meshes with the spline of splined hub 75 and the clutch teeth of gear 74c, however, is separated from the clutch teeth of gear 74a, so as to prevent the rotation of gear 74a from being transmitted to PTO shafts 78 and 79.

In Fig. 16, for convenience, a portion of slide shifter 76 above counter shaft 74 is illustrated as that set at the both PTO shafts driving position, and a portion of slide shifter 76 below counter shaft 74 is illustrated as that set at the mid PTO shaft driving position. In the axial direction of counter shaft 74, the rear PTO shaft driving position is disposed between the both PTO shafts driving position and the mid PTO shaft driving position, and the neutral position is disposed in rear of (in Fig. 16, rightward from) the mid PTO shaft driving position.

In this way, working apparatus driving power take-off device P4 in power transmission unit D is provided at the downstream of working apparatus clutch 30 therein with a selector S for controlling the driving states of mid PTO shaft 78 and rear PTO shaft 79, comprising gears 74a and 74c, splined hub 75 and slide shifter 76 engageable with gears 74a and 74c and splined hub 75.

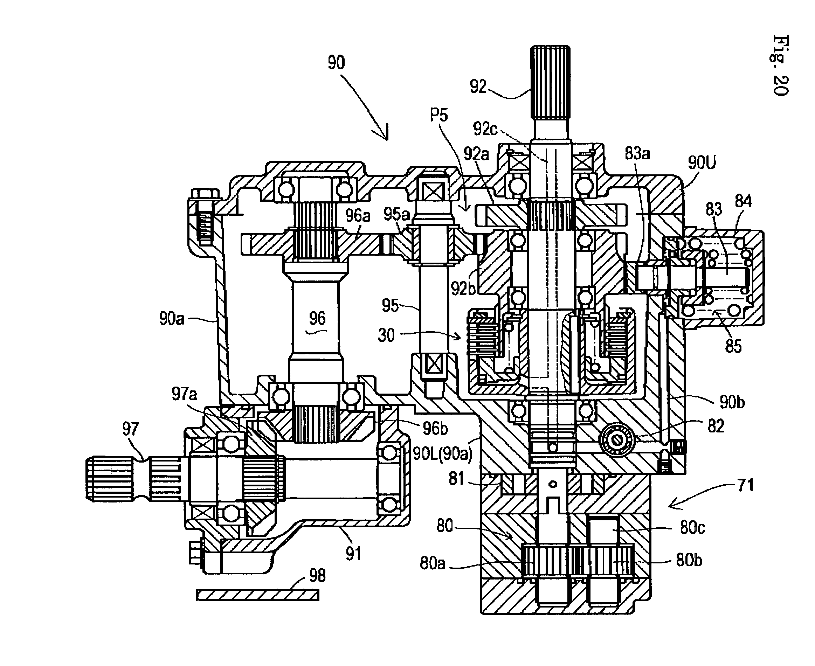

A working vehicle (riding lawn mower) 120 equipped with power transmission unit E shown in Fig. 18 will now be described before description of power transmission unit E shown in Figs. 19 and 20. Working vehicle 120 is provided with a vehicle frame 121 including a pair of left and right fore-and-aft extended side plate portions. Engine 103 including vertical output shaft 104 is supported through vibration isolating rubbers 103a onto a rear portion of vehicle frame 121, similar to that in working vehicle 100 of Fig. 1. Engine output shaft 104 is extended downward from vehicle frame 121 so as to be fixedly provided thereon with output pulley 105.

Power transmission unit E, comprising left and right symmetric transaxles TL and TR (only right transaxle TR is shown in Fig. 18) and gear casing 90 spanned between housings 1 of respective transaxles TL and TR, is disposed below vehicle frame 121. Housing 1 of each of transaxles TL and TR supports single axle 2, and drive wheel 2a is provided on the outer end of axle 2. Casters 110 serving as follower wheels are supported at a front end of vehicle frame 121. Normally, two left and right casters 110 are applied. Alternatively, only single caster 110, or casters 110 more than two may be applied.

Mower unit 207 is vertically movably disposed below vehicle frame 121 in front of power transmission unit E. Mower unit 207 includes mowing rotary blades 207a, and is provided with horizontal input shaft 207b projecting rearward from the upper portion thereof so as to drive rotary blades 207a.

A common primary drive shaft 92 for drive of axles 2 and for drive of rotary blades 207a of mower unit 207 projects vertically upward so as to be fixedly provided thereon with an input pulley 92d and a cooling fan 92e. Belt 106 is looped over input pulley 92d and output pulley 105 so as to transmit the output power of engine 103 to power transmission unit E.

A PTO shaft 97 projects horizontally forward from a lower portion of gear casing 90 of power transmission unit E so as to be connected to input shaft 207b of mower unit 207 through propeller shaft 206 and the universal joints. An unshown hydraulic lifting actuator for lifting mower unit 207 is provided, and a hydraulic pressure supply mechanism for the hydraulic lifting actuator is disposed in pump housing 71 (see Fig. 20) fixed on a lower portion of gear casing 90.

In working vehicle 120, engine room 202, driver's seat 111, left and right control levers 112, brake pedal 113, and so on, are disposed above vehicle frame 121, similar to those in working vehicle 100 of Fig. 1. Control levers 112 are operatively connected to respective speed control arms 15 (see Fig. 19) pivoted on respective left and right transaxles TL and TR. Brake pedal 113 is operatively connected to brake arms 16 (see Fig. 19) of respective transaxles TL and TR.

Power transmission unit E will now be described with reference to Figs. 19 and 20, on the assumption that each transaxle T has laterally horizontal axle 2 and vertical pump shaft 4 and motor shaft 6, and gear casing 90 is spanned between the top ends of transaxles TL and TR so as to have forward projecting PTO shaft 97.

Power transmission unit E is configured so that gear casing 90 incorporating a working apparatus driving power take-of device P5 is spanned between housings 1 of transaxles TL and TR. A lower casing part 90L is fastened onto the top surfaces of the wall portions of respective housings 1 of transaxles TL and TR around respective recesses 1 c by bolts, and lower casing part 90L and an upper casing part 90U are vertically joined to each other and fastened to each other by bolts, thereby constituting gear casing 90. Lower casing part 90L is fixedly provided on a rear bottom surface thereof with pump housing 71, as shown in Fig. 20.

As shown in Fig. 19 (illustrating a state of gear casing 90 from which upper casing part 90U has been removed), while gear casing 90 is provided at the central portion thereof with primary drive shaft 92, gear casing 90 is substantially T-like shaped when viewed in plan, such as to have a lateral extended portion, whose center portion coincides to the central portion of gear casing 90 housing primary drive shaft 92, and have a fore-and-aft extended portion extended forward from the portion of gear casing 90 housing primary drive shaft 92. The fore-and-aft extended portion is extended downward between housings 1 of respective transaxles TL and TR so as to have the downwardly extended portion serving as a PTO drive train housing portion 90a. The lateral extended portion of gear casing 90 includes left and right end portions, which are fastened onto respective top end portions of housings 1 of transaxles TL and TR (the wall portions of upper housing parts 1U around respective recesses 1c) so as to journal input shafts (pump shafts) 4 of respective transaxles TL and TR, and incorporate gears 4a fixed on respective top portions of input shafts 4.

Vertical primary drive shaft 92 is journalled at the lateral middle of the lateral extended portion of gear casing 90, and projects upward from gear casing 90 as mentioned above so as to be fixedly provided thereon with input pulley 92d which can be connected to engine output shaft 104 through belt 106,

Alternatively, to attach input pulley 92d and cooling fan 92e onto primary drive shaft 92, the structure with the bearing for absorbing the belt tension applied onto the input pulley may be employed, similar to that of power transmission unit A2. Alternatively, instead of cooling fan 92e on primary drive shaft 92, input shafts 4 of respective transaxles TL and TR may project outward from gear casing 90 so as to be provided thereon with respective cooling fans 38, similar to those of power transmission unit A3. Further alternatively, input shaft 4 of one of transaxles T may be provided thereon with input pulley 39 so as to serve as the common primary drive shaft shared between the traveling drive train and the working apparatus drive train, similar to that of power transmission unit A4. Alternatively, a later-discussed counter shaft 93 may be provided thereon with a cooling fan or an input pulley. Alternatively, primary drive shaft 92 may be directly and coaxially connected to engine output shaft 104, as shown in power transmission units B, C1 and C2.

The lateral extended portion of gear casing 90, T-like shaped when viewed in plan, incorporates a traveling drive train from primary drive shaft 92 to respective input shafts (pump shafts) 4 of transaxles TL and TR. In this regard, a gear 92a is fixed on primary drive shaft 92, each of a pair of vertical counter shafts 93 is journalled in gear casing 90 between primary drive shaft 92 and each input shaft 4, and a gear 93a is fixed on each counter shaft 93 so as to mesh with gear 92a and corresponding gear 4a.

In this way, the traveling drive train in gear casing 90 includes right and left symmetric gear trains, i.e., a right gear train from primary drive shaft 92 to input shaft 4 of right transaxle TR and a left gear train from primary drive shaft 92 to input shaft 4 of left transaxle TL. Due to the right and left symmetric gear trains, the equality of input rotary speed between transaxles TL and TR is substantially constantly kept

PTO drive train housing portion 90a, disposed between housings 1, incorporates working apparatus driving power take-off device P5, including PTO shaft 97, working apparatus clutch 30, brake shaft 83 interlocking with working apparatus clutch 30, a gear train from working apparatus clutch 30 to PTO shaft 97, and so on. Hydraulic working clutch apparatus 30, similar to those of power transmission units A1 to A4, B and D, is provided around primary drive shaft 92 in a rear portion of PTO drive train housing portion 90a (below the lateral middle of the lateral extended portion of gear casing 90). Primary drive shaft 92 is bored therein with a fluid passage 92c for supplying or draining fluid to and from the clutch operation fluid chamber of working apparatus clutch 30.

Similar to pump housing 71 of power transmission unit D shown in Fig. 16, pump housing 71 provided on gear casing 90 incorporates trochoidal PTO clutch pump 81 and circumscribed gear type working apparatus driving pump 80, both of which are driven by primary drive shaft 92. PTO clutch pump 80 supplies fluid into the clutch operation fluid chamber of working apparatus clutch 30, and working apparatus driving pump 81 supplies fluid to the hydraulic lifting actuator for lifting mower unit 207.

A fluid passage is bored within a lower rear portion of gear casing 90 (lower casing part 90L) from PTO clutch pump 81 to fluid passage 92c in primary drive shaft 92, and provided at the midway portion thereof with switching valve 82. When switching valve 82 is set at an opened valve position, fluid from PTO clutch pump 81 is supplied into the clutch operation fluid chamber of working apparatus clutch 30 through fluid passage 92c. When switching valve 82 is set at a closed valve position, fluid delivered from PTO clutch pump 81 and fluid from the clutch operation fluid chamber of working apparatus clutch 30 are drained through fluid passage 92c so as to disengage working apparatus clutch 30.

In this way, primary drive shaft 92 serves as the input member of working apparatus driving power take-off device P5, i.e., the upstream side drive shaft of working apparatus clutch 30 by itself, so that the working apparatus drive train from the primary drive shaft to the input member of working apparatus driving power take-off device P5 consists of only primary drive shaft 92, thereby saving expansion of gear casing 90.

Brake shaft 83 axially slidably penetrates a wall portion of gear casing 90 (lower casing part 90L) in perpendicular to primary drive shaft 92 (horizontally), and brake shoe 83a is provided on the inner end of brake shaft 83 so as to face gear 92b. Further, accumulator housing 84 projects from an outer surface of gear casing 90 (lower casing part 90L), and brake shaft 83 is inserted at the outer end portion thereof into accumulator housing 84. Accumulator housing 84 is provided therein with the brake operating spring chamber, and accumulator 85 for absorbing fluid during engagement of working apparatus clutch 30 is configured in accumulator housing 84, similar to those of power transmission unit D.

In addition to the fluid passage extended from switching vale 82 for supplying fluid passage 92c with fluid for operating working apparatus clutch 30, a fluid passage 90b for supplying fluid for operating brake shaft 83 is formed within a wall portion of gear casing 90 so as to be extended from switching valve 82 to the brake operation fluid chamber in accumulator housing 84. When switching valve 82 is set at the opened valve position, the fluid delivered from PTO clutch pump 81 is supplied into the clutch operation fluid chamber of working apparatus clutch 30 so as to engage working apparatus clutch 30, and simultaneously, brake shaft 83 is moved opposite to gear 92b so as to unbrake gear 92b. Also, accumulator 85 absorbs a part of the brake operation fluid so as to reduce the shock when working apparatus clutch 30 is engaged. On the other hand, when switching valve 82 is set at the closed valve position, switching valve 82 drains the fluid delivered from PTO clutch pump 81, the fluid from the clutch operation fluid chamber of working apparatus clutch 30, and the fluid from the brake operation fluid chamber. Accordingly, working apparatus clutch 30 is disengaged, and brake shaft 83 is moved toward gear 92b so as to press brake shoe 83a on the tip thereof against gear 92b, thereby preventing inertial rotation of gear 92b.

A gear train from gear 92b to PTO shaft 97 in working apparatus driving power take-off device P5 will be described with reference to Figs. 19 and 20. In PTO drive train housing portion 90a of gear casing 90, vertical counter shafts 95 and 96 are journalled, a gear 95a is fixed on counter shaft 95, a gear 96a is fixed on counter shaft 96, and gear 95a meshes with gears 92b and 96a. A bevel gear casing 91 is hung down from a front bottom portion of gear casing 90 (lower casing part 90L). Horizontal PTO shaft 97 projects forward from bevel gear casing 91, and a bevel gear 97a is fixed on horizontal PTO shaft 97 in bevel gear casing 91. Counter shaft 96 is extended at a lower end portion thereof into bevel gear casing 91 so as to be fixedly provided thereon with a bevel gear 96b meshing with bevel gear 97a. In this way, a gear train including gears 92b, 95a, 96a, 96b and 97a is interposed between working apparatus clutch 30 and PTO shaft 97.

Incidentally, a connection plate 98 connecting housings 1 of transaxles TL and TR is disposed across below bevel gear casing 91 so as to further ensure a sufficient rigidity of entire power transmission unit E.

A power transmission unit F will now be described with reference to Figs. 21 to 24. Power transmission unit F includes a pair of left transaxle TaL and right transaxle TaR (generically named as "transaxles Ta") and power working apparatus driving power take-off device P1 having working apparatus clutch 30 and brake 31.

Similar to all the above-mentioned power transmission units, power transmission unit F includes a gear casing 130a spanned between left and right transaxles TaL and TaR so as to incorporate a gear train for distributing engine power among transaxles TaL and TaR and working apparatus driving power take-off device P1. The distinctive point of power transmission unit F is a housing 130, which is formed integrally with opposite left and right transaxle housing portions constituting respective left and right transaxles TaL and TaR. Housing 130 is also formed integrally with a clutch casing portion incorporating working apparatus driving power take-off device P1, i.e., working apparatus clutch 30 and brake 31, at a lateral middle portion thereof between the left and right transaxle housing portions. Further, housing 130 is formed at a top portion thereof integrally with gear casing 130a.

Incidentally, Figs. 21 to 24 illustrate only representative left transaxle TaL, on the assumption that illustrated left transaxle TaL and omitted right transaxle TaR are symmetrically constituted at respective left and right end portions of housing 130.

Housing 130 is formed by vertically joining a top housing member 131, a middle housing member 132 and left and right bottom housing members 133 to one another. Middle housing member 132 is formed at the top thereof integrally with a laterally extended lower gear casing portion 132a, Top housing member 131 is joined at its opened bottom surface onto the opened top surface of lower gear casing portion 132a so as to constitute gear casing 130a between top housing member 131 and lower gear casing portion 132a of middle housing member 132.

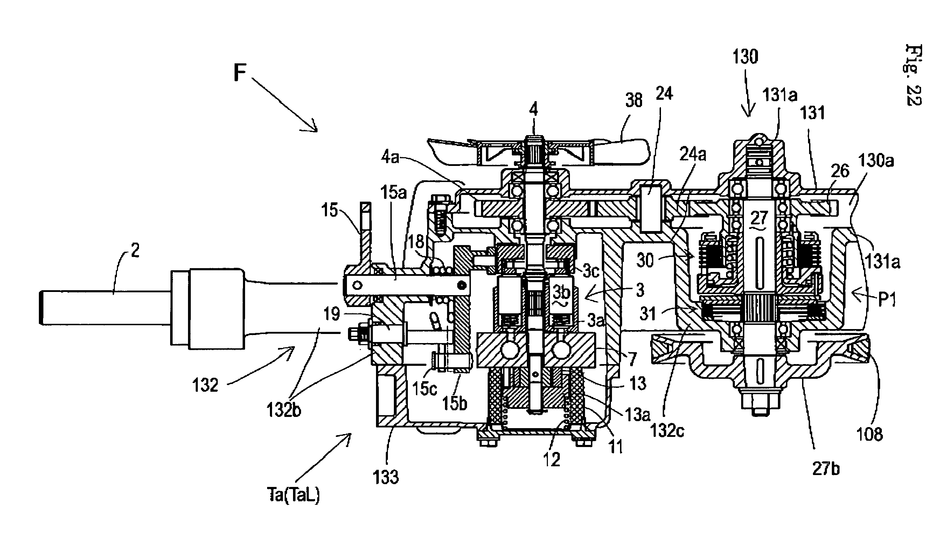

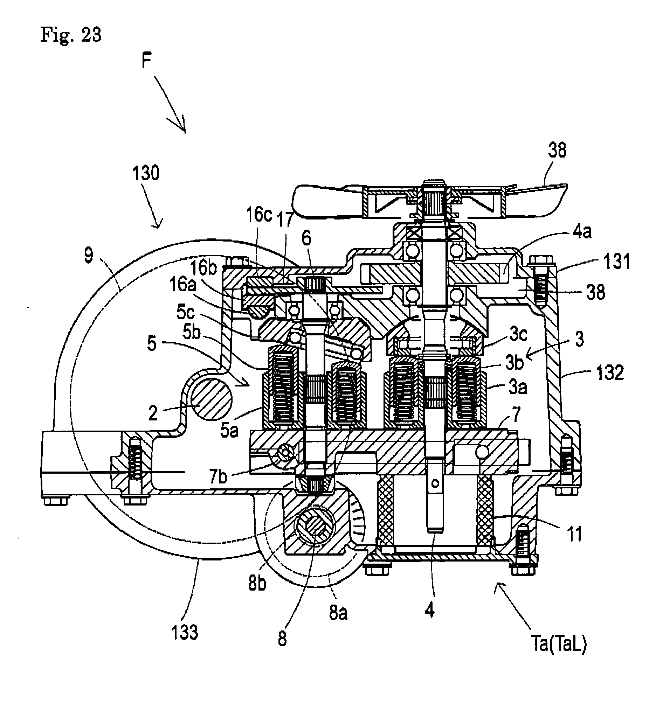

Middle housing member 132 has left and right opposite end portions laterally symmetrically shaped as a pair of transaxle housing portions 132b. The pair of bottom housing members 133 are joined at their opened top surfaces to opened bottom surfaces of respective transaxle housing portions 132b of middle housing member 132. As shown in Figs. 22 and 23, each transaxle housing portion 132b and each bottom housing member 133 joined to the transaxle housing portion 132b incorporate the HST, single axle 2 and the deceleration gear train interposed between the HST and axle 2. The HST includes hydraulic pump 3 having vertical pump shaft 4, hydraulic motor 5 having vertical motor shaft 6, center section 7 onto which hydraulic pump 3 and motor 5 and charge pump 13 surrounded by fluid filter 11 are attached. In this way, each transaxle Ta is configured similar to transaxle T except for the housing structure. Incidentally, Fig. 22 illustrates the HST in one style with charge pump 13 provided on pump shaft 4 extended downward from center section 7, and Fig. 23 illustrates the HST in another style without charge pump 13.

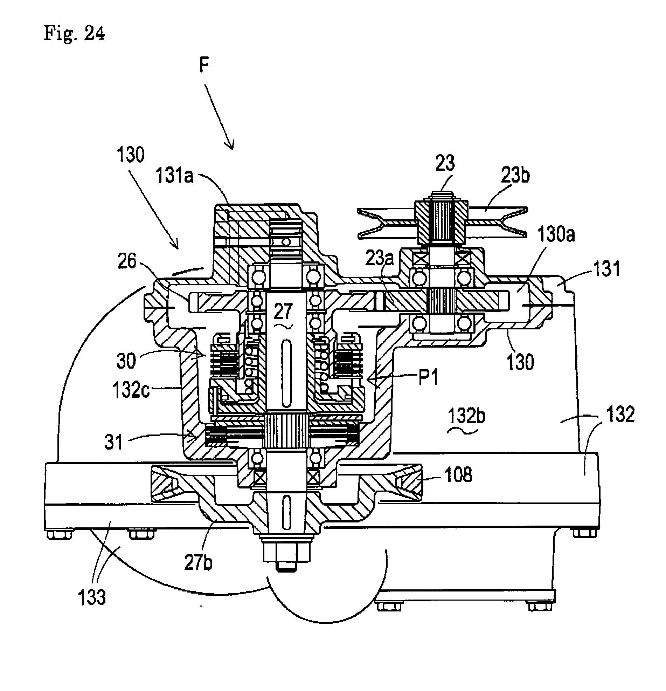

As shown in Figs. 21 and 24, middle housing member 132 has a lateral middle rear portion of lower gear casing portion 132a expanded rearward and downward between left and right transaxle housing portions 132b, so as to serve as a clutch casing portion 132c incorporating vertical PTO shaft 27, working apparatus clutch 30 and brake 31 constituting working apparatus driving power take-off device P1. Working apparatus clutch 30 and brake 31 just below working apparatus clutch 30 are disposed around PTO shaft 27 in clutch casing portion 132c. PTO shaft 27 is extended downward from the bottom of clutch casing portion 132c of middle housing member 132 so as to be fixedly provided thereon with pulley 27b drivingly connected to a working apparatus through belt 108. A rear top portion of top housing member 131 is formed as a fluid duct portion 131a journaling a top portion of PTO shaft 27, so as to supply clutch operating pressure fluid to working apparatus clutch 30 through ducts formed in fluid duct portion 131 a and PTO shaft 27.

As shown in Figs. 21 and 24, vertical primary drive shaft 23 and gear 23a fixed on primary drive shaft 23 are disposed in the laterally middle front portion of gear casing 130a formed at the top of housing 130. Primary drive shaft 23 is extended upward from top housing member 131 so as to be fixedly provided thereon with pulley 23b, as shown in Fig. 24, thereby being drivingly connected to an engine through a belt. Vertical pump shaft 4 of the HST in each transaxle Ta is extended upward into each of the left and right end portions of gear casing 130a so as to be fixedly provided thereon with gear 4a. Each of the pair of vertical counter shafts 24 is disposed between primary shaft 23 and each pump shaft 4 in gear casing 130a, and gear 24a is fixed on each counter shaft 24 so as to mesh with gear 23a and each gear 4a, thereby distributing the rotary force of primary drive shaft 23 between the HSTs of left and right transaxles TaL and TaR. Incidentally, each motor shaft 4 is extended upward from top housing member 131 so as to be fixedly provided thereon with cooling fan 38 for cooling each transaxle Ta.

Further, as shown in Figs. 21 and 23, the left and right end portions of gear casing 130a are expanded rearward so as to incorporate brake disks 17 fixed on the tops of motor shafts 6 of respective transaxles TaL and TaR. Brake arm 16 to be operated for braking brake disk 17 is disposed on the laterally proximal outer side of each transaxle housing portion 132b opposite to speed control arm 15 disposed on the laterally distal outer side of each transaxle housing portion 132b.

As shown in Figs. 21, 22 and 24, gear 26 is disposed in the laterally middle rear portion of gear casing 130a, is extended downward into clutch casing portion 132c of middle housing member 132, and is disposed around PTO shaft 27 in working apparatus clutch 30 rotatably relative to PTO shaft 27. Working apparatus clutch 30 is interposed between gear 26 and PTO shaft 27. In other words, gear 26 serves as the input member of working apparatus driving power take-off device P1. Gear 23a directly meshes at its rear end with gear 26, so as to constitute the branching gear train from primary drive shaft 23 to working apparatus driving power take-off device P1. The only distinctive point of the gear train in gear casing 130a from that in gear casing 20 is gears 23a and 26 directly meshing with each other without gear 25a therebetween.

The foregoing power transmission units are preferred embodiments of the present invention, and may be modified in arrangement and construction at need, particularly in correspondence to a target working vehicle, without departing from the scope of the invention defined by the following claims.

For example, the foregoing description of each of power transmission units A1 to A4, E and F is based on the assumption that the common primary drive shaft shared between the traveling drive train and the working apparatus drive train is disposed vertically so as to be drivingly connected to the vertical engine output shaft through the belt transmission mechanism. Alternatively, in each of power transmission units A1 to A4, E and F, the primary drive shaft may be directly and coaxially connected to the engine output shaft, similar to that of each of power transmission units B, C1 and C2, or the primary drive shaft may be disposed horizontally so as to be connected to a horizontal engine output shaft through universal joints and so on. If the primary drive shaft is disposed horizontally in each of power transmission units A1 to A4 and F, PTO shaft 27 becomes horizontal so as to be able to be drivingly connected to mower unit 207 having horizontal input shaft 207b through propeller shaft 206 and universal joints. If the primary drive shaft is disposed horizontally in power transmission unit E, PTO shaft 97 becomes vertical so as to be able to be drivingly connected to mower unit 109 having vertical input shaft 109b through belt 108.

In each of the foregoing embodiments, both the pump shaft and the motor shaft in the HST disposed in the transaxle are disposed perpendicular to the longitudinal direction of the axle. Alternatively, the pump shaft may be disposed perpendicular to the longitudinal direction of the axle, and the motor shaft may be disposed in parallel to the longitudinal direction of the axle. In this case, the center section cannot be shaped in the flat plate, but has to be shaped such as to have a pump mounting surface and a motor mounting surface disposed perpendicular to each other. However, a drive train from the motor shaft to the axle can economically consist of only spur gears.

### INDUSTRIAL APPLICABILITY

The power transmission apparatus for a working vehicle according to the present invention is appropriate to a working vehicle which can turn sharply (e.g., zero-turn), a small size vehicle whose minimization is important while the space surrounding the left and right independent transaxles is limited, and so on. For example, the power transmission apparatus is adaptable to a working vehicle such as a riding lawn mower equipped with a mid mount mower unit.

## Claims

1. A power transmission apparatus for a working vehicle, comprising:
substantially symmetrically disposed first and second transaxles, each of which supports a single axle;
a working apparatus driving power take-off device including an input member;
a gear casing spanned between the first and second transaxles;
a primary drive shaft disposed in the gear casing so as to be drivingly connected to a prime mover;
a traveling drive train disposed in the gear casing so as to drivingly connect the primary drive shaft to the input shafts of the respective first and second transaxles; and
a working apparatus drive train disposed in the gear casing so as to drivingly connect the primary drive shaft to the input member of the working apparatus driving power take-off device.

2. The power transmission apparatus for a working vehicle according to claim 1, wherein the working apparatus driving power take-off device is disposed between the first and second transaxles in the axial direction of the axles.

3. The power transmission apparatus for a working vehicle according to claim 1, wherein the input shafts of the transaxles are inserted into the gear casing, wherein the primary drive shaft is disposed at the middle between the input shafts of the transaxles, wherein a first drive train portion of the traveling drive train from the primary drive shaft to the input shaft of the first transaxle is a first gear train, wherein a second drive train portion of the traveling drive train from the primary drive shaft to the input shaft of the second transaxle is a second gear train, and wherein the first and second gear trains are disposed substantially symmetrically with respect to the primary drive shaft.

4. The power transmission apparatus for a working vehicle according to claim 3, wherein the working apparatus drive train includes a gear train between the primary drive shaft and the input member of the working apparatus driving power take-off device.

5. The power transmission apparatus for a working vehicle according to claim 4, wherein the gear train serving as the working apparatus drive train is disposed substantially perpendicularly to the first and second gear trains serving as the traveling drive train.

6. The power transmission apparatus for a working vehicle according to claim 3, wherein the primary drive shaft serves as the input member of the working apparatus driving power take-off device.

7. The power transmission apparatus for a working vehicle according to claim 1, wherein the input shaft of the first transaxle serves as the primary drive shaft, and wherein the drive train portion to the second transaxle is a gear train from the primary drive shaft to the input shaft of the second transaxle.

8. The power transmission apparatus for a working vehicle according to claim 7, wherein the working apparatus drive train includes a gear train to the input member of the working apparatus driving power take-off device branched from an intermediate portion of the gear train from the primary drive shaft to the input shaft of the second transaxle.

9. The power transmission apparatus for a working vehicle according to claim 8, wherein the gear train of the working apparatus drive train branched to the input member of the working apparatus driving power take-off device is disposed substantially perpendicularly to the gear train from the primary drive shaft to the input shaft of the second transaxle.

10. The power transmission apparatus for a working vehicle according to claim 1, wherein the traveling drive train has a plurality of rotary shafts and at least one of the rotary shafts constituting the traveling drive train projects outward from the gear casing so as to be provided thereon with a cooling fan enabling cooling both of the first and second transaxles.

11. The power transmission apparatus for a working vehicle according to claim 1, wherein the input shafts of the respective first and second transaxles penetrate the gear casing, and project outward from the gear casing so as to be provided thereon with respective cooling fans.

12. The power transmission apparatus for a working vehicle according to claim 1, the working apparatus driving power take-off device including:
a power take-off shaft; and
a clutch for selectively drivingly engaging or disengaging the input member of the working apparatus driving power take-off device to and from the power take-off shaft.

13. The power transmission apparatus for a working vehicle according to claim 12, wherein the clutch is disposed inside the gear casing.

14. The power transmission apparatus for a working vehicle according to claim 12, wherein the clutch is continuously connected to the outside of the gear casing.

15. The power transmission apparatus for a working vehicle according to claim 12, wherein the working apparatus driving power take-off device includes a gear train interposed between the clutch and the power take-off shaft.

16. The power transmission apparatus for a working vehicle according to claim 15, wherein the gear train of the working apparatus driving power take-off device interposed between the clutch and the power take-off shaft is disposed between the first and second transaxles.

17. The power transmission apparatus for a working vehicle according to claim 16, wherein the gear train of the working apparatus driving power take-off device interposed between the clutch and the power take-off shaft is disposed substantially perpendicularly to the traveling drive train.

18. The power transmission apparatus for a working vehicle according to claim 12, wherein a plurality of power take-off shafts serve as the power take-off shaft of the working apparatus driving power take-off device, and wherein a selector is disposed between the plurality of power take-off shafts at the downstream side of the clutch so as to selectively transmit power to the plurality of power take-off shafts.

19. The power transmission apparatus for a working vehicle according to claim 1, wherein the integral assembly unit of the gear casing and the transaxles can be selectively mounted onto a vehicle frame whether the primary drive shaft is disposed vertically or horizontally, in correspondence to the output direction of the prime mover.

20. The power transmission apparatus for a working vehicle according to claim 1, wherein fluid can flow among the first and second transaxles and the gear casing.

21. The power transmission apparatus for a working vehicle according to claim 1, wherein the first and second transaxles include respective separate housings supporting the respective axles, and wherein the gear casing is spanned between the housings of the respective first and second transaxles.

22. The power transmission apparatus for a working vehicle according to claim 1, wherein the gear casing is formed integrally with a housing having a pair of opposite portions constituting the respective first and second transaxles.

23. The power transmission apparatus for a working vehicle according to claim 22, wherein the housing has a portion constituting the working apparatus driving power take-off device between the opposite portions constituting the respective first and second transaxles in the axial direction of the axles.
